# EUROPEAN PATENT SPECIFICATION

(11) **EP 2 875 677 B1**
(45) Date of publication and mention of the grant of the patent: **01.05.2019**
(21) Application number: 13707680.8
(22) Date of filing: 07.03.2013
(51) Int. Cl.: H04W 48/20, H04W 36/00

(54) **METHOD AND DEVICE FOR ADVANCED CELL RESELECTION FOR CALL QUALITY IMPROVEMENT**
VERFAHREN UND VORRICHTUNG ZUR ERWEITERTEN ZELLENNEUAUSWAHL ZUR GESPRÄCHSQUALITÄTSVERBESSERUNG
PROCÉDÉ ET DISPOSITIF DE RESÉLECTION DE CELLULE AVANCÉE POUR L'AMÉLIORATION DE LA QUALITÉ DES APPELS

(30) Priority: 18.07.2012 EP 12176951
(43) Date of publication of application: 27.05.2015
(73) Proprietor: Gemalto M2M GmbH, 81541 Munich (DE)
(72) Inventor: BREUER, Volker, 16727 Bötzow (DE); WEHMEIER, Lars, 14612 Falkensee (DE); RÖHL, Bernd, 12109 Berlin (DE); DIPPEL, Rainer, 12203 Berlin (DE)
(74) Representative: Grevin, Emmanuel
(86) International application number: PCT/EP2013/054640
(87) International publication number: WO 2014/012682

(56) References cited:
- WO-A1-2006/134027
- WO-A1-2011/100252
- "3rd Generation Partnership Project; Technical Specification Group Radio Access Network; User Equipment (UE) procedures in idle mode and procedures for cell reselection in connected mode (Release 10)", 3GPP STANDARD; 3GPP TS 25.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.5.0, 26 June 2012 (2012-06-26), pages 1-52, XP050581124, [retrieved on 2012-06-26] cited in the application
- "3rd Generation Partnership Project; Technical Specification Group GSM/EDGE Radio Access Network; Radio subsystem link control (Release 1999)", 3GPP STANDARD; 3GPP TS 05.08, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.23.0, 1 November 2005 (2005-11-01), pages 1-100, XP050358959, cited in the application

## Description

### Technical field

The present invention relates to a mobile device configured to communicate with base stations, a respective base station being linked to at least one of a plurality of cells, which belongs to one or more wireless cellular communication networks, the mobile device being configured to operate under a cell assignment to a first one of said cells.

### Background of the Invention

Known mobile devices operating in wireless cellular communication networks are widely dependant on the behaviour and the configurations of a wireless cellular communication network they are operating in. Typically such wireless cellular communication networks (in this document also named "networks") prescribe criteria, which are to be used by the network itself and by mobile devices operating in the network for cell-related procedures. As a matter of fact networks tend to avoid that mobile devices change to a neighbour network by means of such predetermined criteria, in particular when a given network is the home network of the mobile device, even in cases where the mobile is about to leave the coverage area of a network and another network would be more suitable.

This leads to situations, in which a connection or cell assignment of a mobile device to a cell of the current network lasts longer than the required quality for servicing the mobile device can be provided by a cell of the current network. In effect this leads to call drops in a connected mode of the mobile device, unsuccessful connection attempts or long waiting times due to unsuccessful re-establishment attempts to other cells of the current network until a mobile device can successfully establish an assignment to a cell of a neighbouring network following a PLMN scan.

An overall desensitization of the receiver of the mobile device could be used in order to increase roaming speed and make it more likely that a mobile device is camping on a cell that provides good signal quality. A disadvantage is that all advantages of a sensitive receiver are lost as well. Further this leads to bouncing effects as once a mobile device has camped on a cell from a network with better radio conditions it bounces quickly back to the home network with a higher priority even if the radio conditions are far weaker.

A solution used in a 2G standard in the connected mode provides that a mobile device that detects a decrease in radio conditions starts to simulate receiving errors (bad frame indications BFI) and reports those to the network. The prior art thus has a tendency to force mobile devices to adhere to the domain of the current network, sacrificing user experience in terms of connection quality, potential call drops and/or delays in service availability. This also applies to the idle mode as the network provides said predetermined acceptability-criteria.

### Description of Embodiments of the Invention

An embodiment of a mobile device forming a first aspect of the invention is suggested in claim 1. An embodiment of a method for operating a mobile device, according to a second aspect of the invention, is defined in claim 9.

A mobile device according to the present invention is configured to communicate with base stations, a respective base station being linked to at least one of a plurality of cells belonging to one of a set comprising at least this one wireless cellular communication network, wherein said mobile device is configured to a) operate under a cell assignment to a first one of said cells, b) detect cells of the wireless cellular communication network, c) initiate cell-related procedures in order to execute a change of the cell assignment to a second one of said cells, d) maintain predeterminable first acceptability-criteria for cell assignment, and to e) consider only those cells of the set of wireless cellular communication networks for the change of the cell assignment that comply with said first acceptability-criteria.

In other words, the mobile device, when it is assigned to one of said cells, is able to initiate cell-related procedures in order to initiate and execute a change of the assigned cell. For this purpose, the suggested mobile device maintains the first acceptability-criteria. By virtue of these first acceptability-criteria, cells of the wireless cellular communication network are taken into consideration for a change of the cell assignment only if they comply with said first acceptability-criteria.

The first acceptability-criteria relate to measurable physical quantities of RF signals received by the mobile device, in particular by its RF unit. Examples of such quantities and acceptability-criteria will be given further below in the context of the description of preferred embodiments of the mobile device of the present invention.

An advantage of the mobile device over the above-mentioned approach of simulating and reporting receiving errors is that it is foreseeable for the mobile device, which cell becomes the second cell, to which the mobile device will be assigned. A change of the cell assignment to an unwanted cell with a predictably poor quality of service can thus be avoided.

A mobile device as suggested is a device configured to perform wireless communication with other communication devices by means of exchanging signals with a wireless cellular communication network (public land mobile network, PLMN). Such PLMNs comprise in particular wireless cellular communication networks for voice and/or data communication, including networks in accordance with GSM, GPRS, EDGE, UMTS, CDMA, LTE and further known standards of wireless voice and/or data communication.

Different variants of a mobile device according to the present invention are mobile handsets like mobile phones, smart phones, PDAs etc., or wireless modules for use in other devices, such as in equipment, machines, sensors, actuators, appliances, computers and the like. Wireless modules for use in application scenarios formed by such other devices are often called M2M modules. Such other devices equipped with the wireless modules typically control the M2M modules through a defined interface, in particular an AT-interface.

Wireless cellular communication networks cover a service area through cells which are each equipped with one or more base stations. The base stations comprise a radio frequency transmitter and receiver units that execute the communication with the mobile devices. Such base stations can be in particular a BTS, NodeB or eNodeB. For a mobile device, a cell is visible through its base stations. Therefore if a cell is detected or selected, this means that physically its base station is detected.

The first acceptability-criteria, in one embodiment, comprise only a single first acceptability criterion. In another embodiment, the first acceptability-criteria comprise a plurality of two or more different first acceptability-criteria. For reasons of simplicity, without intending to exclude any of the mentioned embodiments, the present specification and the claims use the term "first acceptability-criteria" with respect to both cases, and thus also includes the embodiment of only one first acceptability criterion. The embodiments differ in the amount of evaluation required. Where a small amount of evaluation is advantageous and sufficient to reliably establish whether or not a given cell is acceptable for service under the given criterion, a single criterion is sufficient. It is also considered to provide an option of varying the number of first acceptability-criteria in dependence on user input or automatic detection of predefined conditions. In the latter case, the number of first acceptability-criteria can be changed dynamically in adaptation to changing conditions. Such conditions may for instance relate to remaining energy resources of the mobile device. In order to reduce energy consumption, the evaluation amount may be reduced in a low-battery condition.

As further part of the invention the mobile device comprises a RF unit configured to receive, with a given receiver sensitivity, and transmit RF signals for communication with base stations and to measure physical quantities related to those RF signals received. In this embodiment the mobile device is configured to maintain the first acceptability-criteria for cell assignment, which are related to the measurable physical quantities of the received RF signals, and is further configured to consider, in a first mode of operation of the mobile device, only those cells as candidate cells for forming the second cell, which comply with the first acceptability-criteria, and to consider, in a second mode of operation of the mobile device, all those base stations as the candidate cells for forming the second cell, which are physically detectable for the RF unit based on the given receiver sensitivity of the RF unit.

The term "given receiver sensitivity" is used to refer to a characteristic of receiver hardware including an antenna and connected circuitry that performs the sensing of the RF signals and a transformation of the RF signals into corresponding electrical signals in the RF unit of the mobile device. The given received sensitivity is a fixed characteristic that does not change in time over the time spans relevant for the present invention. Typically, the given receiver sensitivity forms a maximum sensitivity of the RF unit of the mobile device. The given receiver sensitivity can thus also be described as a measure of a fixed, in particular a minimum RF signal level that is detectable by the RF unit of the mobile device at the air interface. It may be quantified for instance in units of dBm or as a ratio to a suitable reference in dB.

The mentioned first acceptability-criteria relate to and are used to rate radio conditions. In one variant, the first acceptability-criteria contain at least one signal quality criterion related to and to be applied to the RF signals received in an exchange with a base station of a cell. Thus, preferably the first acceptability-criteria relate to one or to a combination of a plurality of measures or physical quantities indicative of signal quality, such as, e.g., a signal strength value obtained in dBm, or a signal-quality measure obtained in dB. Further derived measures which generally are based on the mentioned quality measures can be used for defining the first acceptability-criteria, e.g., measures indicating a threshold number, threshold frequency or threshold ratio of received bad frames (BFI). Such measures can also define relative offsets. That means for example that, provided a given overall value, e.g., a value of a signal strength, is available, all values of the first acceptability-criteria are defined as an offset compared to that overall value. Preferably the mentioned overall value is a predeterminable required minimal quality threshold for servicing. This is a value which defines a physical lower threshold, which is a minimum value for any type of cell communication to become possible. This is typically a predetermined value, e.g., -105 dBm, and may be derived from empirical analysis. Such a minimum receivability threshold can additionally be defined per service context or technology according, as will be described further below when turning to the distinction of context types.

In order to assess compliance with the first acceptability-criteria, the obtained values of respective quantities are preferably measured and compared with at least one quality threshold value. In one such embodiment, only a single threshold value is used. If the signal quality measured is higher than said quality threshold value, the respective first acceptability criterion is matched. In other embodiments, a quality range is defined. In this case, a RF signal complies with the first acceptability-criteria, if a signal quality measured lies within the quality range, that is, within an interval of the signal-quality measure defined by an upper and a lower threshold value. In other embodiments, reciprocal thresholds or ranges of a signal-quality measure are defined. Hence, in these embodiments, the measured quality measure must have a value below the defined threshold or outside of the range to comply with the first acceptability-criteria.

Therefore, the mobile device is additionally configured to additionally maintain second acceptability-criteria, which are of equal or lower severity compared to said first acceptability-criteria, and to select, in the first mode of operation, the currently assigned first cell for continued cell assignment if the first cell complies with the second predeterminable acceptability-criteria.

The mobile device is thus further configured to use said second acceptability-criteria to examine radio conditions of the current cell. If the radio conditions, in particular the signal quality or signal strength, do not match the second acceptability-criteria it is checked if other cells are available. The availability of cells for a mobile device is depending on the signals a mobile device can receive from the base stations of the cell or vice versa. Typically the availability is depending upon the signal quality and the minimal quality threshold for servicing. The availability of a cell for a mobile device requires at least a higher signal quality than the minimal quality threshold for servicing.

This feature in particular considers the radio conditions of the currently assigned cell as well, but provides for a cell-assignment decision that is made by the mobile device and not by the network. The second acceptability-criteria are used by the mobile device for deciding, within the mobile device, if the currently assigned cell is to be selected for continued assignment or if - provided such candidate cell are available - a change of cell assignment is to be initiated. It is preferred that the second acceptability-criteria are maintained in the mobile device and differ from the first predeterminable acceptability-criteria, but are also blocked from direct predetermination by the network. The second acceptability-criteria preferably are of lower severity compared to first acceptability-criteria.

It is noted that the first acceptability-criteria are preferably predeterminable. In other embodiments, also the second acceptability-criteria are predeterminable. However, in such preferred embodiments, predetermination of the first acceptability-criteria simply by reception of a signalling from the network for controlling current operation is not provided as a technical feature. Instead the first acceptability-criteria can for instance be predetermined by the quality of service (QoS) of an often operated service or a more stringent requirement for a service operated in high quality than normally considered by the network by the device (i.e. data download) requiring a larger C/I (Chip energy to interference level) or in general better RF level than covered by the network-provided preliminary acceptability-criteria. The decision, which first acceptability-criteria level is selected thus is in the hands of the mobile device. As a consequence, the mobile device is enabled to decide also, which network is selected, in case more than one network is available.

The first acceptability-criteria can be of the same kind as given network minimum-access criteria for said cell. Minimum-access criteria per se are known in the art. However, in comparison with these and in contrast with the art as of today, in one embodiment the first acceptability-criteria require the received RF signals to provide a higher signal-quality level to be fulfilled than the minimum-access criteria. In one such embodiment the mobile device is configured to permanently store predeterminable reference acceptability-criteria, receive preliminary acceptability-criteria, which are for instance such minimum-access criteria, from a network node of the wireless cellular communication network to which it is currently attached, compare said preliminary acceptability-criteria with the stored reference acceptability-criteria, and to use the reference acceptability-criteria as the first acceptability-criteria, if the preliminary acceptability-criteria received from the network node are of lower severity than the reference acceptability-criteria, and otherwise use the preliminary acceptability-criteria as the first acceptability-criteria in the first mode of operation.

This way, it is ensured that the first acceptability are of higher severity than the minimum-access criteria.

The preliminary acceptability-criteria typically comprise parameters of general network- or technology-dependant acceptability-criteria, which are used for cell selection and reselection, for example the known path-loss criterion "C1" (GSM 05.08, Section 6.4). In comparison, the quality measures according to the first acceptability-criteria are more severe. For instance, other additional criteria checked using additional measures, e.g. power, are monitored to obtain a decision regarding compliance with the first acceptability-criteria.

In other embodiments, the first acceptability-criteria may be of a kind that is different from the given network minimum-access criteria, thus being especially suited for evaluating a service capability of second-cell candidates for the mobile device.

A cell being at a lower signal-quality level may be in general in the position to provide a minimum service, i.e., a voice call with in average acceptable quality, or a data download with a certain QoS at a low throughput rate, whilst a cell at higher signal-quality level from a different PLMN may provide a high quality service without momentary fails due to fading, and with a higher data throughput.

Adaptability of the first acceptability-criteria is a very useful feature of preferred embodiments of the mobile device. Therefore, in one embodiment the mobile device, in particular in the first mode of operation, is further configured to
initiate an examination of the compliance of the RF signals received from the first cell with said first acceptability-criteria,
if said RF signals received from the first cell do not match the first acceptability-criteria, initiate a check for a physical detectability of RF signals from at least one second cell different from the first cell and an examination of the compliance of the RF signals received from the detected at least one second cell with said first acceptability-criteria ,
if it is found in the examination that one of those second cells physically detectable matches the first acceptability-criteria, initiate the cell-related procedure change the cell assignment to that second cell,
if it is found in the examination that no second cell is available, adapt the first acceptability-criteria towards a lower severity and repeat the foregoing steps of examining and checking, until a second cell is detected that matches the adapted first acceptability-criteria or, in case preliminary acceptability-criteria are known to the mobile device, the first acceptability-criteria equal the preliminary acceptability-criteria.

Thus also in this embodiment a filtering is performed to identify a list of candidate cells that match the first acceptability-criteria. If at least one of the cells matches the first acceptability-criteria, that is, if the list of candidate cells is not empty, the mobile device initiates cell-related procedures for changing the cell assignment. If not, i.e., in case the list of candidate cells is in fact found to be empty, the first acceptability-criteria are weakened and the described procedure is repeated until either a matching cell is found or the first acceptability-criteria reach the preliminary acceptability-criteria.

This adaptation can be initiated either by a higher-level handling layer or a lower-level measuring layer, or by another type of control unit that is related to other functions. In an application device, for instance such function can also be performed by an application unit that is in hardware-connection with the mobile device. In this case, the application unit is preferably configured to provide respective control information for adaptation of the first acceptability-criteria to the mobile device using an AT command.

With a view to the respective purpose of different mentioned acceptability-criteria these are differentiated by severity. That means in the context of this invention, acceptability-criteria with a higher severity require a better signal quality of a cell under consideration than those with a lower severity. If acceptability-criteria are weakened, a lower severity is used than before.

The second predeterminable acceptability-criteria can also or additionally be derived from first acceptability-criteria, furthermore applying a hysteresis mechanism is another possibility to dynamically define the second predeterminable acceptability-criteria.

The initiation of cell-related procedures can have different appearances. The differences mainly depend on who is responsible for assignment of a new cell in a given operational state of the mobile device. In a preferred embodiment, the mobile device further comprises an evaluation unit, which is configured to detect an operational state of the mobile device and to activate or maintain the first mode of operation, in case the detected operational state is one of the following: an ongoing power-on procedure, a detected out-of-service state, an ongoing PLMN selection, an ongoing PLMN search, a detected idle mode of operation, a detected radio-link failure, a call re-establishment. The evaluation unit is configured to activate or maintain the second mode of operation, in case the detected operational state is one of the following: an ongoing cell-reselection procedure being performed after a radio-link failure, an ongoing call-reestablishment, an ongoing circuit-switched call, and an operation of the mobile device in a connected mode. Of course, there is no ambiguity in the assignment of a detected operational state to a respective one of the first and second modes of operation.

In an idle mode of operation, according to procedures of the prior art, the mobile device regularly provides location updates and listens to broadcast messages from the network, in particular from the currently assigned cell, which would indicate incoming calls or short messages. The mobile device determines whether or not radio conditions of the current cell and of further cells, to which the mobile device is currently not assigned, comply with given acceptability-criteria, which are prescribed by the network. Hence, in the idle mode, a cell reselection might be initiated according to standard procedures as described in TS 03.22 (2G), TS 25.304 and TS 25.133 (3G). In a connected mode, according to solutions also known from the prior art, the network checks for the radio conditions between serving cell and mobile device in particular based on measurements reported by the mobile device, and the network may decide for a cell change of the mobile device during the current connection (so-called hand-over). In case that the connection breaks due to low RF quality a mobile device according to the prior art may decide, after an failed attempt to re-establish its connection to said cell, to establish a connection to any other cell of the current network whether any of these cells fulfils the network-defined preliminary acceptability-criteria, and, if that is not the case, start a PLMN search to find a different network fulfilling the preliminary acceptability-criteria. However, in the previously known solutions for both operational states just mentioned, it is thus not the mobile device, but the network, to which the mobile device (according to the prior art) is attached which is the decisive actuator by providing the levels and thresholds for cell-related procedures. The network, according to the prior art, also defines the threshold levels, until which the mobile device shall attempt to establish or re-establish a connection to any of the cells of said network. This assignment of roles according to the prior art has led to the previously described disadvantageous tendency that mobile devices adhere to a currently used network, which implied a sacrifice in user experience in terms of connection quality, in that call drops or large out-of-service times due to repeated unsuccessful re-establishment attempts and delays in service availability were frequently experienced. This drawback of the previously known solutions also applies to the idle mode or in general when a mobile device according to the prior art is in a camped normally state because also in the idle mode it is the network that provides said preliminary acceptability-criteria.

In contrast, the mobile device of the present invention is in preferred embodiments configured to adjust, which detectable cells - regardless which allowed network it belongs to - are taken into account for assigning to that cell. In one such embodiment, the mobile device is configured to permanently store predeterminable reference acceptability-criteria, receive preliminary acceptability-criteria from a network node of the wireless cellular communication network to which it is currently attached, compare said preliminary acceptability-criteria with the stored reference acceptability-criteria, and use the reference acceptability-criteria as the first acceptability-criteria, if the preliminary acceptability-criteria received from the network node are of lower severity than the reference acceptability-criteria. Preferably, thus, the mobile device deals with the preliminary acceptability-criteria predetermined by the network. As is per se known in the art, the mobile device receives such preliminary acceptability-criteria from the network. According to the prior art, it does not matter if this is done regularly, when the preliminary acceptability-criteria were last changed on the network side, or whether they were only prescribed to the mobile device at start-up or even the first start-up of the mobile device after its manufacture. In the present embodiment of the mobile device of the invention, the mobile device compares such preliminary acceptability-criteria with the reference acceptability-criteria maintained by the mobile device. The stricter set of acceptability-criteria is used by the mobile device, that is, the set of higher severity, while the set of acceptability-criteria having lower severity is disregarded by the mobile device. Since the reference acceptability-criteria are in preferred embodiments predefined to be more severe than the preliminary acceptability-criteria defined by the network, the mobile device applies a set of acceptability-criteria for cell assignment in the first mode of operation, which are different from that defined by the network in that they have higher severity.

The preliminary acceptability-criteria predetermined by the network are in typical embodiments of mobile device for operation in a 2G network the known criteria RX_LEV_ACCESS_MIN, GPRS_RX_LEV_ACCESS_MIN (see TS45.008, TS 43.022). For a mobile device that is to operate in a 3G network, the known preliminary acceptability-criteria are Qrxlevmin, which is the so called Minimum required RX level in the cell (in dBm) and Qqualmin, which is the minimum required quality level in the cells (in dB) (see TS 25.304). For LTE-suitable mobile devices, similar network-given acceptability-criteria are used (see TS 36.304).

In contrast to the preliminary acceptability-criteria, the reference acceptability-criteria are internally maintained by the mobile device. The reference acceptability-criteria are in one embodiment dependant on the service type. That means, for a voice call with a normal priority other reference acceptability-criteria are used than for a data streaming request. The reference acceptability-criteria are to be chosen such that it is assured - for instance due to heuristic experiences - that a servicing of the requested service type can be provided with a particularly high chance of success.

Different embodiments of the mobile device of the present invention implement the new feature in different alternative mobile-device architectures.

In one exemplary alternative, the RF unit is configured to examine RF signals received from all those base stations, which are physically detectable for the RF unit based on a given receiver sensitivity of the RF unit, for compliance with the first acceptability-criteria. In this embodiment it is also the RF unit that is further configured to
a) only in the first mode of operation, provide at the output of the RF unit cell information on only those cells different from the currently assigned first cell, which are linked to those base stations providing RF signals that comply with the first acceptability-criteria and which thus form the candidate cells, and
b) only in a second mode of operation different from the first mode of operation, provide at its output cell information on all cells of those base stations, which are physically detectable for the RF unit based on the given receiver sensitivity of the RF unit.

In this embodiment, the new feature may thus be implemented for instance on the same level of the OSI reference model as other mentioned functions of the RF unit, which typically is the lowest level. Such low-level measuring functions of the RF unit can thus be represented in particular by Layer 1 according to OSI-reference model, which layer is defined as the physical layer. When radio conditions are examined, those cells whose base stations match the first acceptability-criteria are forwarded to a control unit of the mobile device that performs functionality attributable to a higher-level handling layer according to the OSI reference model.

Thus, the filtering of the candidate cells is in one embodiment executed within a lower level measuring layer. In the control unit on the higher-level handling layer, a decision is made whether or not to initiate cell-related procedures on those cells remaining after the filtering by the RF unit, in particular those of cell identification or basic identification. Those decisions can in particular be based on acceptability-criteria provided by the network, as is known from standard procedures. In this case, the first acceptability-criteria do not differ in the nature of the criteria as such, but in the actual value(s) used by the criteria. The values of the first acceptability-criteria are more severe and imply a requirement of higher signal quality.

The filtering of cells that comply with the first acceptability-criteria is in other embodiments performed on the level of the network layer (layer 3) of the OSI reference model.

In another exemplary alternative embodiment, the RF unit is configured to provide at its output signal information on RF signals received by the RF unit from all those base stations, which are physically detectable for the RF unit based on a given receiver sensitivity of the RF unit. The mobile device of this embodiment further comprises a filter unit for evaluation of the information provided by the RF unit. The filter unit is configured to examine the radio signal information for compliance with the first acceptability-criteria and,
a) only in the first mode of operation, provide at its output cell information on only those cells, which are linked to those base stations where the signal information comply with the first acceptability-criteria and which thus form the candidate cells, and
b) only in a second mode of operation different from the first mode of operation, provide at an output of the filter unit cell information on all cells of those base stations, which are physically detectable for the RF unit based on the given receiver sensitivity of the RF unit or based on preliminary acceptability-criteria.

In this embodiment, a separate filter unit is provided that in the first mode of operation performs the examination of the signal information, which is provided by the RF unit, in view of the first acceptability-criteria. The filter unit thus achieves that in the first mode of operation only those cells are selected by the mobile device for cell-related processes to achieve a change of the assignment to a new second cell, which comply with the first acceptability-criteria. The filter unit may be implemented as a unit operating on a higher level than the RF unit, in terms of the OSI reference model. The signal information provided by the RF unit may for instance be determined values of one or more signal-quality measure.

In both alternative structures, a two-step filtering of candidate cells is provided in preferred embodiments. In particular, the mobile device is configured to examine the RF signals received from physically detectable cells in a first ("raw") scan applying a first subset of the first acceptability-criteria. The mobile device is further configured to examine the RF signals received from those cells complying with the first subset of the first acceptability-criteria in a second ("fine") scan employing a second subset of the first acceptability-criteria. The first and the second subset of the first acceptability-criteria differ in that the second-subset criteria are more severe, i.e., represent stricter requirements on signal quality than the first-subset criteria.

The first-subset criteria are in one embodiment applied within a low-level measuring layer such as in the RF unit, in order to examine the radio conditions of physically detectable cells, that is, their base stations. To this end, the raw scan is performed. In this embodiment, a higher-level handling layer, such as the filter unit or an evaluation unit or, in the context of an application device described further below, an application unit is configured to apply the second-subset criteria on those cells complying with the first-subset criteria, thus performing the mentioned fine scan. This improvement allows more flexibility in the adjustment of the first acceptability-criteria and leads to a better performance of the whole process.

According to a further preferred embodiment, an automatic activation or deactivation of the inventive procedure is employed in dependence on an operational state of the mobile device. An example of an operational state is for instance a call status. Other examples of operational states will be given in the following paragraphs. Such embodiments preferably comprise an evaluation unit, which is configured to detect and identify an operational state of the mobile device.

In such embodiments, the evaluation unit is for instance configured to activate the first mode of operation only in defined situations, in particular upon detection of certain operational states of the mobile device. Preferably the evaluation is configured to activate the first mode of operation in a situation, in which the evaluation unit detects a state other than one of a predefined set of states of network-controlled mobility. In states of network-controlled mobility, the network alone is entitled to select a cell that has to be used by the mobile device for sending data to the network. Thus, evaluation unit is preferably configured to activate the first mode of operation when it is detected that the mobile device is currently not maintaining an active connection, for example no voice call is being made, or in a situation, where the mobile device is detected to be in an idle mode. Beside a detection of an idle mode, a detection of a radio-link failure, of a call re-establishment, of a PLMN-selection or search, of a power-on procedure, or of an out-of-service state can in such embodiments be used for an automatic activation of the first mode of operation. In case the evaluation unit finds the mobile device to be in one of these operational states and further detects that the first mode is already activated, the first mode of operation is maintained. For data connections, in particular packet-based data connections, a detection of an active data transmission or at least an active context by the evaluation unit is in such embodiments a useful criterion for not switching to the first mode of operation, but continuing operation under the second mode of operation and apply the preliminary acceptability-criteria.

In another embodiment, an activation of the first mode of operation is initiated only in case of detection of a service degradation or a call drop. In other words, only when a real disturbance of the communication is detected, the mobile device of this embodiment will show a different behavior compared to prior-art device, namely, by means of the activation of (and operation under) the first mode of operation. A suitable example of a service-degradation criterion is exceeding a certain (threshold) amount or rate of decoding errors, which for mobile devices operating according to a 2G standard is indicated, e.g., by Radio Link Timeouts (RLT). For mobile devices operating according to a 3G standard, this is indicated by means of the so called S-criterion. This embodiment achieves a quick re-establishment of the connection or at least a camping on a cell, which is able to provide communication services to the mobile device. In a particular form of this embodiment, in which an activation of the first mode of operation is triggered by detecting a call drop, only those cells are considered as candidate cells for forming the second cell that are part of a wireless cellular communication network, which is different from the wireless cellular communication network, to which cell the mobile device was assigned at the time the call drop occurred. This form is especially helpful when the latter network, in which the call drop occurred, is the home network of the mobile device and in prior-art solutions therefore would have a higher priority during cell selection than other, in particular foreign networks. If cells of the home network are deliberately ignored, as in the present embodiment, the mobile device has a much better chance to quickly connect to a network with acceptable radio conditions. If no such network can be found, the mobile device is in a not-covered area. The first mode of operation can then be deactivated.

In another embodiment of this kind, the evaluation unit is configured to activate or maintain the first mode of operation, in case the detected operational state is one of the following: an ongoing Power-on procedure, a detected out-of-service state, an ongoing PLMN selection, an ongoing PLMN search, a detected idle mode of operation, a detected radio-link failure, a failed call re-establishment, an ongoing cell-reselection procedure being performed after a radio-link failure and to activate or maintain the second mode of operation, in case the detected operational state is one of the following: an ongoing call-reestablishment, an ongoing circuit-switched call, and an operation of the mobile device in a connected mode.

In an application context, an application device comprising the mobile device of the present invention or one of its embodiments further comprises an application unit, which is connected with the mobile device and configured to control operation of the mobile device via a set of AT commands. The application unit is configured to provide at least one of the following control information to the mobile device via at least one of the AT commands:
a) first control information comprising the first acceptability-criteria and an instruction to apply these first acceptability-criteria; and
b) second control information instructing the mobile device to change from the second mode of operation to the first mode of operation, or vice versa.

Typically, the application unit is further configured to perform application-specific tasks, such as monitoring or controlling an operation of an external machine, to which the application device is connected or connectable. In such embodiments, the mentioned feature allows the application unit a certain control of the cell assignment. In such application devices, the mobile device typically takes the form of a M2M-module.

In one embodiment, the application unit is configured to initiate a switch of operation of the mobile device between the first mode of operation and the second mode of operation. Thus, the first mode of operation of the mobile device can be activated and deactivated, preferably by an AT-command.

According to a second aspect of the present invention, a method for operating a mobile device in communication with base stations is provided, a respective base station being assigned to a respective one of a plurality of cells belonging to one of a set comprising at least this one wireless cellular communication network,
the method comprising:
operating the mobile device under a cell assignment to a first one of said cells,
receiving, with a given receiver sensitivity, RF signals in communication with base stations,
measuring physical quantities related to those RF signals received,
determining a currently active mode of operation of the mobile device;
maintaining predeterminable first acceptability-criteria for cell assignment as criteria related to the measurable physical quantities of the received RF signals,
detecting cells of the wireless cellular communication network,
initiating cell-related procedures in order to execute a change of the cell assignment to a second one of said cells, and
either considering only those cells of the set of wireless cellular communication networks for a change of the cell assignment that comply with said first acceptability-criteria or in a second mode of operation of the mobile device, all those base stations as the candidate cells for forming the second cell, which are physically detectable for the RF unit based on the given receiver sensitivity of the RF unit..

The method of the second aspect of the invention shares the advantages of the mobile device of the first aspect of the invention. In particular, according to the method of the invention, the first acceptability-criteria are used by the mobile device for selecting candidate cells which could be used as the second cell when initiating a cell assignment. As described above, in preferred embodiments that first acceptability-criteria relate to the measured radio conditions regarding the candidate cells. Candidate cells fulfil the first acceptability-criteria and are thus considered by the mobile device as the second cell in a change of the cell assignment to be executed by initiating cell-related procedures.

In the following, embodiments of the method will be described.

In a further embodiment, the method further comprises activating the first mode of operation in response to receiving a command, in particular an AT command, a quasi standard of operational commands, which is based on a set of commands originally developed by Hayes Communication for modems. This embodiment is particularly useful in a given application context of the mobile device in an application device employing machine-to-machine ("M2M") communication. In such application devices, the mobile device typically takes the form of a RF communication module, for instance as a printed-circuit board (PCB) equipped with the necessary additional hardware and software for performing communication in cellular networks under given standards.

In a variant of this embodiment, the method further comprises receiving control information including new first acceptability-criteria to be applied by the mobile device via an AT command.

In a further embodiment, the method further comprises automatically activating or maintaining the first mode of operation in response to detecting a predetermined operational state of the mobile device, in particular in case the detected operational state is one of the following: a radio-link failure, a failed call re-establishment, or an abnormal termination of a circuit-switched or packet-switched call.

This is useful when the mobile device has left a connected mode and means to re-establish the connected mode were not successful. In one form of this embodiment, when one of, a detected out-of-service state, an ongoing PLMN search, a detected radio-link failure which has not been followed by a call re-establishment is detected, only those detected cells are considered as the candidate cells for the second cell that are part of a second wireless cellular communication network which is different from the first wireless cellular communication network, of which the first cell is part of. This may result, especially in border regions between different networks, in an early change to a new network, even if this means leaving a home network of higher network priority. An example of a border region between different networks is given by a geographical region close to the border between two different countries. In a situation where the cells of that home network do not comply with the predetermined first or second acceptability-criteria applied by the mobile device, the user experience is enhanced by the method of the present embodiment in comparison with known algorithms.

In another preferable embodiment, maintaining the first acceptability-criteria is performed in a context-specific manner for a detected one of a plurality of different predetermined context types, the context types including at least one of the following: a) type of service, b) technology type, and c) user selection. Maintaining the first acceptability-criteria preferably comprises in this embodiment: detecting the current context type using at least one predetermined context comparison criterion, and, if the current context falls under one of the predetermined context types according to the context comparison criterion, using said context-specific first acceptability-criteria that is specific for the detected context type.

In this embodiment of the mobile device and of the method of the invention, a distinction of different context-specific first acceptability-criteria or of other acceptability-criteria mentioned hereinabove is achieved. A mobile device in general operation often considers a context type. In particular it considers the service type. As mentioned above for the example of the reference suitability criteria the different types of service are distinguished, like voice or data transmission, and are taken into account for selection of particular thresholds, measurements and criteria. According to the present embodiment, in particular context-specific first acceptability-criteria are used. In effect this means that upon detection of one of said context types respective context-specific first acceptability-criteria are applied in the first mode of operation.

A similar distinction is preferably applied to the technology type. Here the type of technology, like 2G, 3G etc. or finer with respect to EDGE, WCDMA, CDMA etc. That means for a GSM connection different acceptability-criteria are used than for UMTS or LTE.

Finally also a user selection is possible. In this embodiment of a context-specific adaptation of first acceptability-criteria, an activation or deactivation of the first mode of operation can be initiated by a user, in particular by means of an input via any type of user interface. In a variant, the user can additionally select, for which service the first mode of operation employing service-specific first acceptability-criteria are to be selected. This embodiment thus provides a user-selected optimization option.

### Brief Description of the Drawings

Further embodiments of the invention will now be described with reference the accompanying drawings. This description relates to preferred embodiments of the invention, but is not intended to limit the scope of the invention.
Fig. 1 shows a block diagram of a first embodiment of a mobile device according to the present invention;
Fig. 2 shows a block diagram of a second embodiment of a mobile device according to the present invention;
Fig. 3 shows a block diagram of a third embodiment of a mobile device according to the present invention;
Fig. 4 shows a block diagram of a embodiment of an application device including a mobile device according to the present invention.
Fig. 5 shows a more detailed block diagram of a mobile-communication unit 502 of a further embodiment of a mobile device according to the present invention;
Fig. 6 shows a more detailed block diagram of an RF unit of a mobile device according to a sixth embodiment of a mobile device according to the present invention;
Fig. 7 shows a block diagram of a seventh embodiment of a mobile device according to the present invention;
Fig. 8 shows an embodiment of a method for operating a mobile device according to the present invention;
Fig. 9 shows another embodiment of a method for operating a mobile device according to the present invention;
Fig. 10 shows a schematic illustration of a mobile device according to the prior art attached to a home cell and located within coverage areas of different cells of different networks.
Fig. 11 shows a schematic illustration of an effect of a selection process of candidate cells for a cell reassignment, using preliminary acceptability-criteria provided by the network, in accordance with processes known from the prior art, as performed by a mobile device according to the prior art when located within the coverage areas of the same cells and networks shown in Fig. 10.
Fig. 12 shows a schematic illustration of an effect of a selection process of candidate cells for a cell reassignment as performed in accordance with an embodiment of a method of the present invention., using first acceptability-criteria maintained by a mobile device according to the present invention when located within the same coverage area as shown in Figs. 10 and 11.
Fig. 13 shows a diagram illustrating an evaluation result of candidate cells of different networks, determined by a mobile device, depicted depending on signal quality (in dBm), with respect to first and predetermined acceptability-criteria.

### Detailed Description of Embodiments Shown in the Drawings

In the drawings, a block representation is used to describe certain features and functions of mobile devices according to embodiments of the invention. The blocks shown are schematic representations of certain features and functions, which in different embodiments are implemented in the form of application-specific hardware units or software-controlled processors, or a combination of both. In particular, such respective features and functions represented by a block in the drawings can be integrated in a single hardware unit, such as a system-on-chip, or can be implemented in the form of separate different hardware units that are connected for exchange of signal and data, for instance in a system-in-package or in a chip set mounted on a PCB.

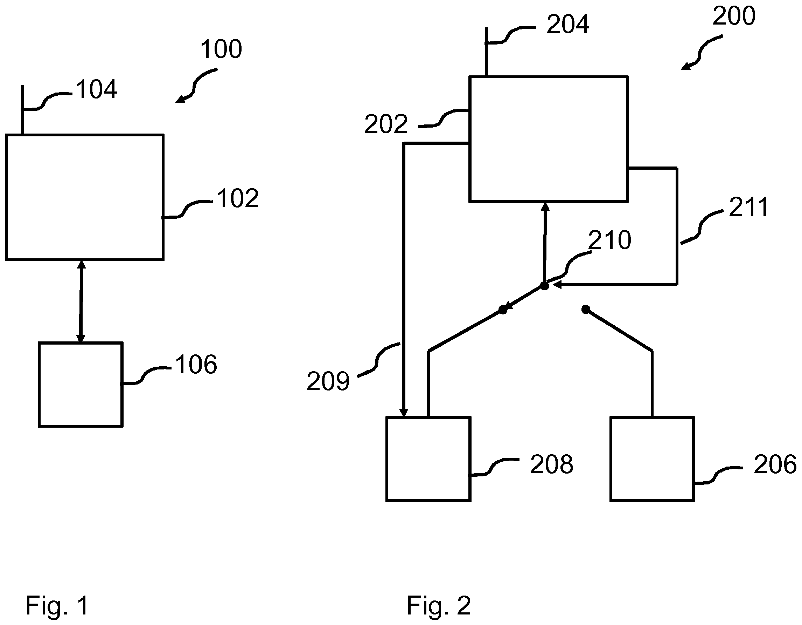

Fig. 1 shows a block diagram of a mobile device 100 forming a first embodiment of a mobile device according to the present invention. The mobile device 100 is shown in a very simplified block diagram that summarizes almost all functions of the mobile device 100 in a mobile-communication unit 102.

In particular, the mobile-communication unit 102 is configured to exchange signalling information and payload information according to at least one communication protocol of wireless cellular communication using RF signals with external communication devices, including in particular base station, via an air interface represented by an antenna 104. As such, the mobile-communication unit 102 incorporates a number of functional units, which are not shown here in detail, and which perform protocol functionalities of cellular wireless communication on at least the layers 1 to 3 according to the OSI reference model, that is, the physical layer, the medium access layer and the network layer.

The present description is restricted to explaining those functions of the mobile-communication unit 102 that help understanding the new functionality introduced by the present invention. In particular, on the physical layer, the mobile communication unit is configured to perform measurements of at least one physical quantity indicative of a signal quality of RF signals received from base stations serving respective cells of given wireless cellular communication networks, and detectable via the antenna 104. The mobile-communication unit 102 is arranged and configured to examine the RF signals received for compliance with one or more acceptability-criteria, which will be specified below.

The mobile communication unit 102 is further configured to perform cell-selection procedures, depending on the outcome of the mentioned examination process, and to perform the required signalling to reach operation under a cell assignment to a first one of the detectable cells. In particular, the mobile device 100 is configured to initiate cell-related procedures in order to execute a change of the cell assignment to a second one of said cells under certain conditions.

In contrast with known mobile devices, the mobile device 100 is configured to initiate and control such cell-related procedures based on a set of one or more first acceptability-criteria, which are maintained by the mobile device 100 itself in a local first storage 106 that forms a part of the mobile device 100 and is connected with the mobile-communication unit 102.

For simplicity, but without restriction, the plural form "criteria" is used in the following. The first acceptability-criteria serve for filtering cells, which are suitable as candidate cells for a cell assignment in a cell-related procedure that results in a change of the cell assignment of the mobile device 100 from the current cell to a second cell. Only those cells that comply with the first acceptability-criteria qualify as candidate cells, in other words, are considered by the mobile device 100 as candidate cells for the second cell.

The first acceptability-criteria stored in the first storage 106 for instance take the form of data representing one or more threshold values for one or more respective predetermined quantities, which are indicative of signal quality and are ascertained by the mobile-communication unit. Examples of such threshold values of quantities determined from the RF signals received in an exchange with a base station of a cell are, e.g., a signal strength threshold value obtained in dBm, or a signal-quality threshold value obtained in dB. In addition or as an alternative, threshold values of derived quantities, which generally are based on the mentioned quality indicators, can be used for defining the first acceptability-criteria, e.g., quantities indicating a threshold number, threshold frequency or threshold ratio of received bad frames (BFI). As mentioned before, such thresholds can also be defined in the form of relative offsets. If, e.g., a value of a signal strength defined by the network is available as a preliminary acceptability criterion, to which the mobile device is currently attached, a threshold value of a suitable first acceptability criterion may be defined as an offset with reference to that value of the signal strength.

Thus, the first acceptability-criteria differ from those acceptability-criteria, which are defined by the network and known per se in the art. Such network-defined acceptability-criteria are in the present application referred to as preliminary acceptability-criteria. In particular, the first acceptability-criteria are more severe than the preliminary acceptability criterion or criteria defined by the network.

Maintenance of the first acceptability-criteria is performed by the mobile communication unit 102. The maintenance is in the present embodiment restricted to storage of the first acceptability-criteria in the first storage 106 of the mobile device 100. Variants of the present embodiment provide advanced maintenance functions for the first acceptability-criteria, including adaptation in reaction to current radio conditions sensed by the mobile device 100. Such advanced maintenance functionality of the mobile device with respect to the first acceptability-criteria will be described in more detail in the context of other embodiments further below.

The first storage 106 is in one embodiment integrated into the mobile-communication unit 102. In another embodiment, it forms a separate storage arranged externally with reference to the mobile-communication unit 102, but at the same time internally with reference to the mobile device 100. The first storage 106 may for instance be implemented as an integral part of a storage device providing memory capacity also for additional data stored and read by the mobile communication unit 102 during operation of the mobile device 100.

Fig. 2 shows a block diagram of a second embodiment of a mobile device 200 according to the present invention. The mobile device 200 incorporates the functionality of the mobile device 100 of Fig. 1. The following description will focus on additional features that distinguish the mobile device 200 from the mobile device 100. In contrast to the mobile device 100, the mobile device 200 is configured to operate in two different operational modes with respect to the change of its cell assignment. In a first mode of operation of the mobile device 200, it considers only those cells as candidate cells for forming the second cell, which comply with the first acceptability-criteria. This first mode of operation corresponds to what has been described in the context of the embodiment of the mobile device 100. The mobile device 200 is also configured to operate in a second mode of operation. In this second mode of operation, the mobile device 200 is configured to consider all those base stations as the candidate cells for forming the second cell, which are physically detectable for the RF unit based on the given receiver sensitivity of the RF unit. This situation corresponds to the use of the network-defined preliminary acceptability-criteria instead of the first acceptability-criteria. To this end, the preliminary acceptability-criteria are stored in a second storage 208 that forms a part of the mobile device 100 and is connected with the mobile-communication unit 102. The second storage 208 differs from the first storage 206 (which corresponds to the first storage 106 described in the context of the embodiment of Fig. 1) in that it is used for network-defined preliminary acceptability-criteria. This implies access rights to the second storage 206 for certain processes, in which the respective current network communicates and thus prescribes applicable preliminary acceptability-criteria in the course of signalling processes. This additional accessibility of the second storage 208 for certain network-initiated control processes is indicated schematically in Fig. 2 by an arrow 209. No such access is provided to the first storage 206 for these processes in the present embodiment.

The mobile-communication unit 202 of the mobile device 200 is further configured to switch between the first and second operational mode and vice versa. To this end, a control connection 211 pointing to a controllable switching unit 210 is provided and indicated schematically in Fig. 2. The controllable switching unit provides access to the respective storage 206 or 208, depending on whether the first or second mode of operation is active. This ensures the use of the respective applicable acceptability-criteria, namely, the first acceptability-criteria in the first mode of operation, and the preliminary acceptability-criteria in the second mode of operation. The controllable switching unit 210 may be implemented in hardware as an integral part of the mobile-communication unit 202 or as a separate unit connected with the mobile-communication unit. Of course, a software-implemented controllable switching unit can be used as well.

The current switching state of the controllable switching unit 210, as shown in Fig. 2, corresponds to that during operation under the first mode of operation. The switching between the first and second modes of operation is dependent on a detection of a current operational state of the mobile device 200. The detection of the operational state is performed by the mobile-communication unit 202. It is configured to initiate the activation of the first mode of operation, or to maintain the first mode of operation, in case the detected operational state is one of the following: an ongoing power-on procedure, a detected out-of-service state, an ongoing PLMN selection, an ongoing PLMN search, a detected idle mode of operation, a detected radio-link failure, a failed call re-establishment, an ongoing cell-reselection procedure being performed after a radio-link failure. In all other operational states of the mobile device 200, the second mode of operation is activated or maintained active, depending on the previous operational state. In one variant of this embodiment, the mobile-communication unit is further configured to activate or maintain the second mode of operation, in particular in case the detected operational state is one of the following: an ongoing call-reestablishment, an ongoing circuit-switched call, and an operation of the mobile device in a connected mode.

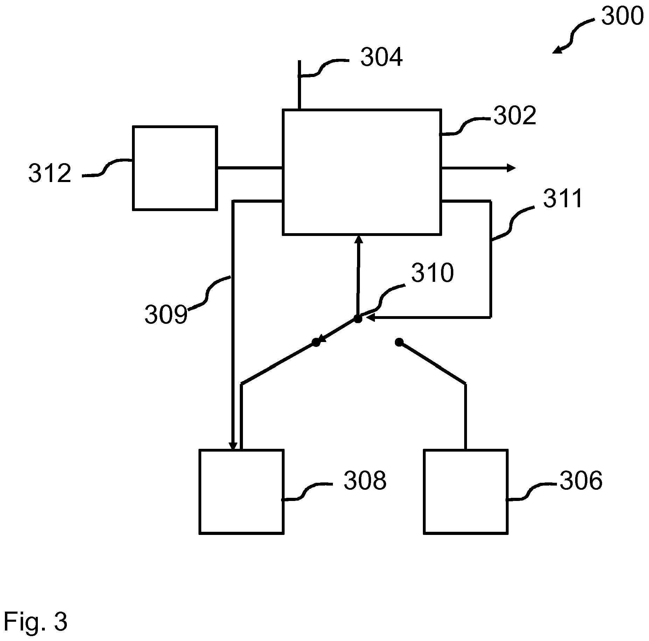

Fig. 3 shows a block diagram of a third embodiment of a mobile device 300 according to the present invention. The mobile device 300 resembles the mobile device 200. Therefore, reference labels are used in Fig. 3 that differ from those of Fig. 3 only in the first digit, in order to allow an easy identification and reference to the description of corresponding features and functional units in the context of Fig. 2. In addition to the embodiment of Fig. 3, the mobile device 300 incorporates a third storage 312. The third storage contains reference acceptability-criteria. The reference acceptability-criteria in third storage 312 are maintained locally by the mobile communication 302. However, in operation of the mobile device 300 they are typically not changed and not subject to adaptation. Instead, they serve as a reference to be used in an adaptation of the first acceptability criteria, as will be described in the following. Writing access to the third storage 312 is restricted. It is not granted to any process operated by the mobile device 300 other than a device-management process, which is to be performed in a non-connected state of the mobile device and in which basic settings of the mobile device 300 are determined.

In operation of the mobile device 300, when preliminary acceptability-criteria are received from the network, the mobile-communication unit compares the received preliminary acceptability-criteria with the reference acceptability-criteria stored in the third storage 312. The mobile-communication unit determines that the reference acceptability-criteria are used as the first acceptability-criteria, if the preliminary acceptability-criteria received from the network node are of lower severity than the reference acceptability-criteria.

From here on, the operation of the mobile device corresponds to that of the mobile device 200 of Fig. 2.

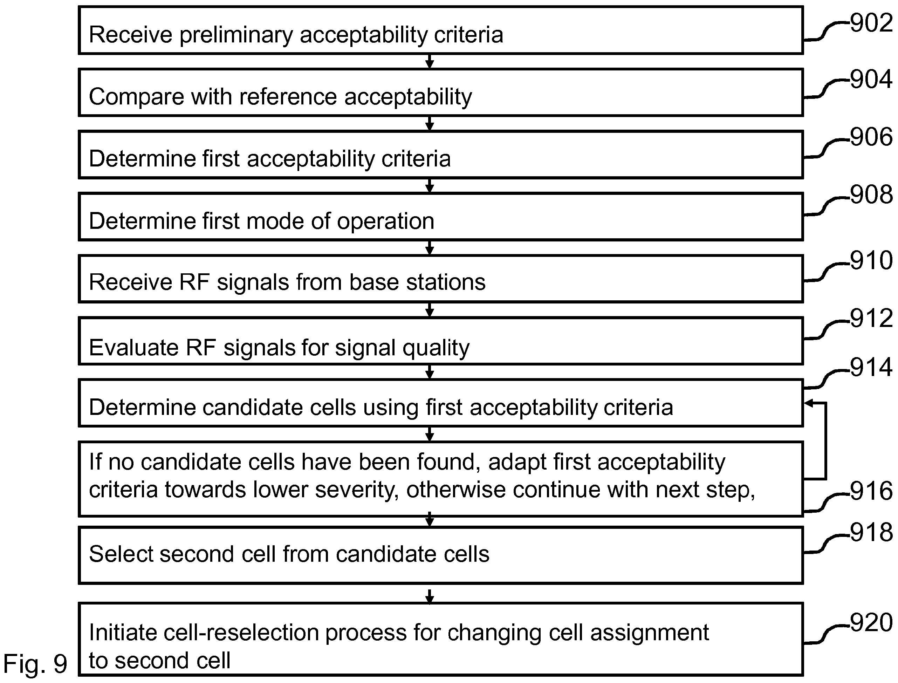

The use of the reference acceptability-criteria is particularly advantageous in embodiments of the mobile device 300, in which the mobile-communication unit 302 is configured to adapt the first acceptability-criteria stored in the first storage 306. This will be described in more detail further below in the context of the description of the process shown in Fig. 9. In such embodiments, the reference acceptability-criteria form a set of criteria that is a constant starting point for the first acceptability-criteria and that is to be used if possible under given radio conditions. After a required adaptation of the first acceptability-criteria towards lower severity in view of limited signal quality available from the receivable cells, the reference acceptability-criteria are to be used again as the starting point of the first acceptability-criteria when a cell-related process for changing the cell assignment to a different cell is initiated at a later point in time.

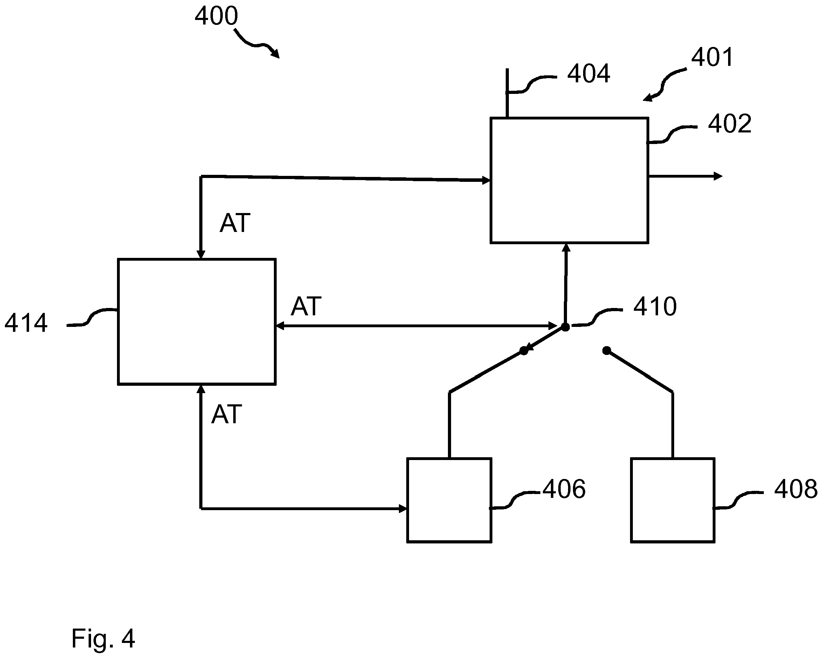

Fig. 4 shows a block diagram of an embodiment of an application device 400 including a mobile device 401 according to the present invention. The basic functionality of the mobile device 401 is similar to that of the mobile device 200 of Fig. 2. The following description focuses on the differences.

The application device 400 has an application unit 414, which is connected with the mobile device 401. The application unit is for instance a measurement device like a sensor, an actuator, or a control device for controlling the operation of a sensor or an actuator. In other examples, the application unit may be a printer device or a display device. An example of the function of the mobile device 400 is, without restriction, a module enabling a machine-to-machine (M2M) communication between the application unit 414 and external devices. To this end, in addition to performing its application-specific tasks as mentioned above by way of example, the application unit 414 is configured to interact with the mobile device 400 in order to effect a wireless communication of application specific payload data or control data with external devices.

The communication is typically bidirectional. Communication of such payload data and control information between the application unit 414 and the mobile device 401 is in the present embodiment achieved via a predefined set of AT commands. Specifically, the application unit 414 is configured to determine and write first acceptability-criteria to the first storage 406 via a suitable AT command. The application unit 414 is also configured to set the mode of operation of the mobile device 401. For the first and second modes of operation, reference is made to the description of the previous embodiments. Specifically, the application unit is configured to initiate a switching from the first mode of operation to the second mode of operation and vice versa. The switching is for instance performed in dependence on application-specific requirements. For instance, communication of some type of payload data to the application device 400 may require a higher reliability or higher capacity of data transmission in the exchange with an external device such as a server machine, which reliability or capacity may only be achievable on the basis of a certain signal quality. The application unit of this exemplary embodiment is configured to activate the first mode of operation if a request for communication of this type is detected.

In a variant of the application device 400 that is not shown in the figures, the application device comprises a mobile device 401 that has extended functionality and more closely corresponds in functionality to the mobile device 300 of Fig. 3. Namely, in addition to the communication capabilities with the application unit 414 via AT commands just described, the mobile device 401 is able to control the activation of the first or second mode of operation independently from the application unit 414 as long as no AT command for specifically activating the first or the second mode, respectively, is issued by the application unit 414. This control capability corresponds to that described for the mobile device 300 of Fig. 3. As an advantageous option, additional AT commands may be provided to let the application unit switch this independent control capability of the mobile device on or off.

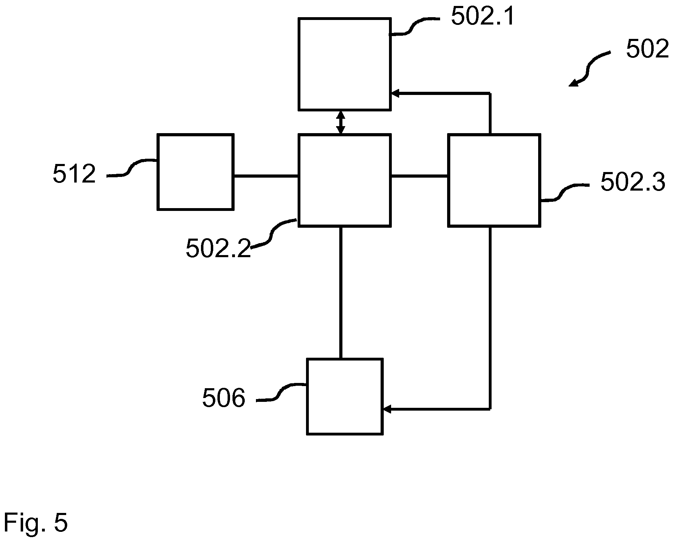

Fig. 5 shows a more detailed block diagram of a mobile-communication unit 502 of a further embodiment of a mobile device according to the present invention. The mobile communication unit 502 has an RF unit 502.1 directly connected with an antenna (not shown), an examination unit 502.2, which is connected with the RF unit, and a control unit 502.3. Furthermore, the first storage 506 and the third storage 512 are shown. In the present embodiment, the first and third storage are integrated into the mobile-communication unit.

In operation, assuming that the mobile device operates in the first mode of operation under a cell assignment to a first cell, the examination unit 502.2 checks for a compliance of the RF signals received from the base station of the first cell with the first acceptability-criteria stored in the first storage 506.

The control unit 502.3 initiates a check for the physical detectability of RF signals from at least one second cell different from the first cell. The signals received by the RF unit 502.1 from the at least one second cell are examined by the examination unit 502.2 for compliance with the first acceptability-criteria.

If it is found that the examination unit determines that one of those second cells physically detectable matches the first acceptability-criteria, a corresponding signal is provided to the control unit. The control unit 502.3 then initiates and controls a cell-related procedure to change the cell assignment to that second cell. In this context, if more than one cell is determined to be a candidate for forming the second cell according to the first acceptability-criteria, standard-based cell ranking processes can be used for the selection of the second cell from the candidates.

If on the other hand the examination unit 502.2 determines from the RF signals that no second cell is available, which meets the first acceptability-criteria, the control unit 502.3 adapts the first acceptability-criteria in the first storage 506 towards a lower severity. Subsequently, the control unit 502.3 again initiates the foregoing steps of examining the RF signals and, if necessary, adapting the first acceptability-criteria, until a second cell is detected that matches the adapted first acceptability-criteria. The process maybe repeated by further stepwise adaptations of the first acceptability-criteria for as long as the adapted first acceptability-criteria have higher severity than the preliminary acceptability-criteria.

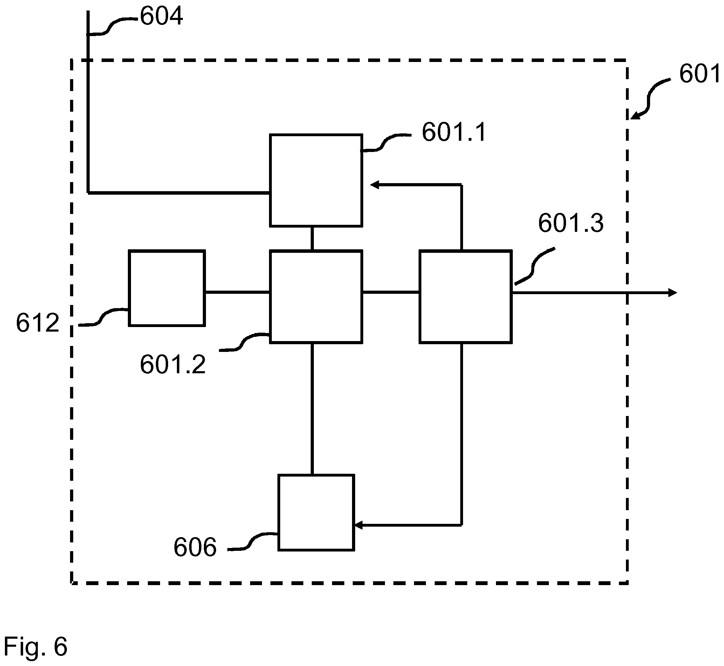

Fig. 6 shows a more detailed block diagram of an RF unit 601 of a mobile device according to a sixth embodiment of a mobile device according to the present invention. The RF unit 601 has an air interface unit 601.1 directly connected with an antenna 604, an RF examination unit 601.2, which is connected with the air interface unit 601.1, and a RF control unit 601.3. Furthermore, the first storage 606 and the third storage 612 are shown and form parts of the RF unit 601.

In operation, assuming that the mobile device operates in the first mode of operation under a cell assignment to a first cell, the RF examination unit 601.2 checks for a compliance of the RF signals received from the base station of the first cell with the first acceptability-criteria stored in the first storage 606.

The RF control unit 601.3 initiates a check for the physical detectability of RF signals from at least one second cell different from the first cell. The signals received by the air interface unit 601.1 from the at least one second cell are examined by the examination unit 601.2 for compliance with the first acceptability-criteria.

If it is found that the examination unit determines that one of those second cells physically detectable matches the first acceptability-criteria, a corresponding signal is provided to the RF control unit. The RF control unit 601.3 then initiates and controls a cell-related procedure to change the cell assignment to that second cell.

If on the other hand the RF examination unit 601.2 determines from the RF signals that no second cell is available, which meets the first acceptability-criteria, the control unit 601.3 adapts the first acceptability-criteria in the first storage 606 towards a lower severity. Subsequently, the RF control unit 601.3 again initiates the foregoing steps of examining the RF signals and, if necessary, adapting the first acceptability-criteria, until a second cell is detected that matches the adapted first acceptability-criteria. The process maybe repeated by further stepwise adaptation of the first acceptability-criteria for as long as the adapted first acceptability-criteria have higher severity than the preliminary acceptability-criteria.

In the present embodiment, therefore, the processes for filtering of candidate cells for a change of the cell assignment based on the first acceptability-criteria are implemented in the RF unit. Advantageously they are fully implemented on the lowest level (physical level) according to the OSI standard model. Higher-level processes are in this variant not involved in the filtering. It is thus not necessary to adapt such higher-level processes operated by the mobile device for incorporating the capability of operating in the first mode of operation.

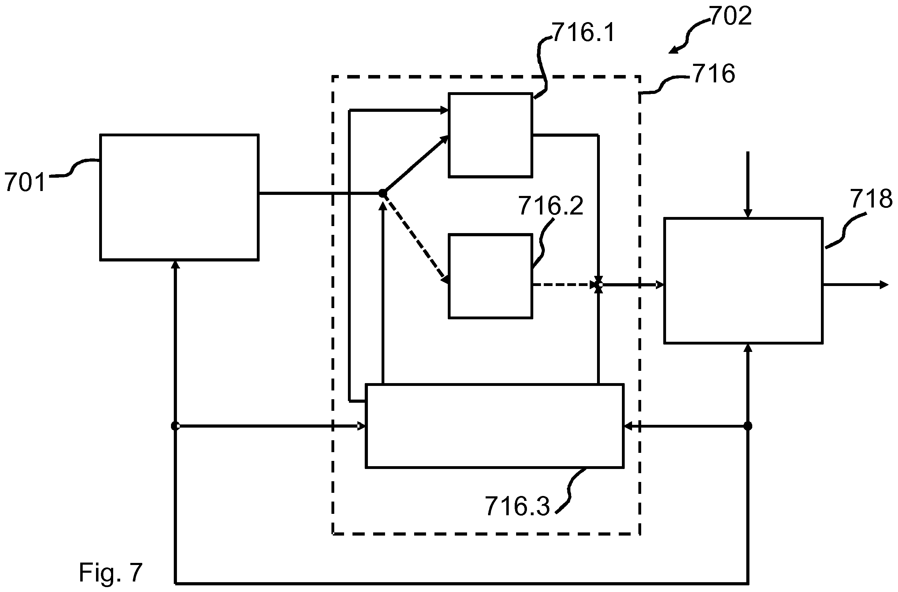

As an alternative to this, Fig. 7 shows a block diagram of mobile-communication unit 702 of a seventh embodiment of a mobile device according to the present invention, in which the filtering is performed by a filter unit 716 separate from a RF unit 701. The filter unit 716 is connected between the RF unit 701 and an evaluation unit 718.

The filter unit 716 comprises two filter stages 716.1 and 716.2, which are arranged in parallel and operated alternatively under the control of a filter-control unit 716.3.

In operation, the RF unit 701 provides at its output signal information on RF signals received from all those base stations, which are physically detectable for the RF unit based on a given receiver sensitivity of the RF unit.

The evaluation unit 718 determines the mode of operation to be used, based on an operational state of the mobile device. To this end, the evaluation unit 718 receives input from the RF unit 701 and from other units (not shown) configured for detecting the operational state of the mobile device. In particular, the evaluation unit 718 activates the first mode of operation, in case the detected operational state is one of the following: an ongoing power-on procedure, a detected out-of-service state, an ongoing PLMN selection, an ongoing PLMN search, a detected idle mode of operation, a detected radio-link failure, a call re-establishment, an ongoing cell-reselection procedure being performed after a radio-link failure. The evaluation unit 718 activates or maintains the second mode of operation, in case the detected operational state is one of the following in particular: an ongoing call-reestablishment, an ongoing circuit-switched call, and an operation of the mobile device in a connected mode.

If the first mode of operation is activated, the filter-control unit 716.3 activates the first filter stage 716.1 and deactivates the second filter state 716.2. Thus, the filter unit 716 applies the first acceptability-criteria to the RF signal information received from the RF unit 701. If the second mode of operation is activated, the filter-control unit 716.3 deactivates the first filter stage 716.1 and activates the second filter stage 716.2. Thus, the filter unit 716 applies the preliminary acceptability-criteria, which are provided by the network, to the RF signal information received from the RF unit 701.

Accordingly, the evaluation unit 718 receives information on suitable candidate cells from the filter unit 716 for a potential change of the cell assignment. The received information differs based on the selected current mode of operation. The evaluation unit applies standard cell-ranking procedures to the received information on the candidate cells in order to select the most-suited second cell and trigger a cell-related process to perform a change of the cell assignment from the current cell to the selected second cell.

The processes performed by the filter unit 716 are in this embodiment implemented on a level higher than the physical level according to the OSI standard model.

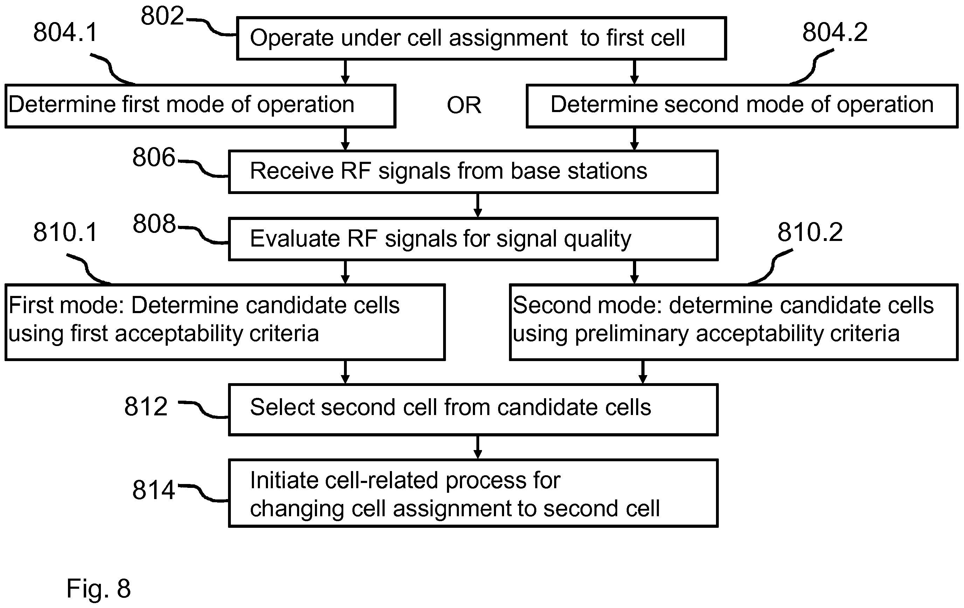

Fig. 8 shows an embodiment of a method for operating a mobile device according to the present invention. The method starts with the mobile device operating under a cell assignment to a first cell in a step 802. In operation, the mobile device determines that it operates either in a first mode of operation (step 804.1) or in a second mode of operation (step 804.2). In both modes of operation, RF signals are received by the mobile device from base stations in order to maintain information on available cells at the current location of the mobile device (step 806). This information is evaluated to determine a signal quality measure that is assigned to the respective base stations or cells. Depending on whether the mobile device operates in the first or second mode of operation, the mobile device determines candidate cells for a potential change of the cell assignment to a second cell based on either first acceptability-criteria (step 810.1) maintained by the mobile device itself, or based on preliminary acceptability-criteria (step 810.2) prescribed by the network, to which the mobile device is attached. In a subsequent step 812, a second cell is selected from the provided candidate cells, the second cell forming the target cell of a change of the cell assignment. In a step 814, the mobile device initiates an appropriate cell-related process for changing the cell assignment to the second cell. After that, the method is repeated from step 802 based on the current cell assignment. Of course, as long as the current cell is determined to provide a sufficient signal quality, no change of cell-assignment is performed. Reference is made to the previous description of embodiments with respect to determining that the signal quality of the current (first) cell is not sufficient.

Fig. 9 shows another embodiment of a method for operating a mobile device according to the present invention. The method comprises receiving preliminary acceptability-criteria from the network, to which the mobile device is currently attached, in a step 902. In a subsequent step 904, the preliminary acceptability-criteria are compared to reference acceptability-criteria maintained by the mobile device itself. The comparison is done according to severity. The mobile device will determine that the reference acceptability-criteria are to be used as first acceptability-criteria in case they are more severe than the preliminary acceptability-criteria (step 906). Under certain operational conditions, a first mode of operation is activated by the mobile device. If the mobile device determines the first mode of operation to be active in a step 908, received RF signal from base stations in a step 910 will be evaluated with respect to signal quality in a step 912. Based on the first acceptability-criteria, the mobile device determines candidate cells for a change of the cell assignment in a step 914. If no candidate cells have been found in step 914, the mobile device adapts the first acceptability-criteria towards lower severity by a predetermined amount in a step 916 and branches back to step 914. When at least one candidate cell has been found in step 914, the mobile device continues with selecting, in a step 918, a second cell as a target cell according to a cell-ranking algorithm and then initiates, in a step 920, a change of the cell assignment from the current cell to the selected second cell.

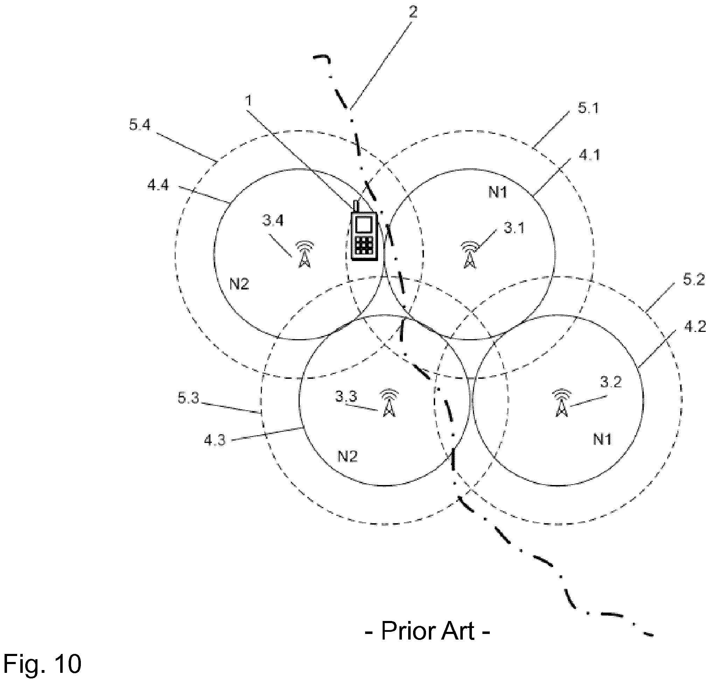

Fig. 10 shows a schematic illustration of a mobile device 1 according to the prior art attached to a home cell and located within coverage areas of different cells of different networks. The exemplary mobile device 1 is located, at a given point in time, within coverage areas of different cells of two different wireless-cellular-communication networks (hereinafter: networks) N1 and N2 operated by two network providers. The paper plane of Fig. 10 corresponds to a map of a certain geographical region. For reasons of simplicity of graphical representation, the only actual geographical information shown in Fig. 10 is a border 2 between the coverage areas of the two networks N1 and N2. As an example, the border 2 may at the same time be a border line between two different countries. However, the presence of a border line between different countries is only an exemplary application case and not a requirement for the applicability of the method to be described below. In the present example, the network N1 covers an area, which is shown in Fig. 10 on the right side of the border 2, while the network N2 covers an area shown in Fig. 10 on the left side of the border 2.

Two respective cells are shown for each network N1 and N2. The cells are served by respective network nodes, which in the following will be referred to as base stations without intending any restriction to a certain technology. In particular, the four cells depicted are served (and formed) by base stations 3.1 and 3.2 for network N1 and by base stations 3.3 and 3.4 for network N2. In the following, the reference labels 3.1 to 3.4 will also be used to refer to a respective cell served by a given one of the base stations 3.1 to 3.4.

The base stations 3.1 to 3.4 each have their respective core coverage area 4.1, 4.2, 4.3, 4.4, which are represented in Fig. 10 by circles drawn with full lines. Additionally, respective extended coverage areas 5.1, 5.2, 5.3, 5.4 are displayed and represented in Fig. 10 by circles drawn with dashed lines and having a larger radius than those of the core coverage area. In these extended coverage areas the exemplary mobile device 1 can still detect the availability of the respective cell. However, the radio conditions, that is, the signal quality received from a respective base station in its respective extended coverage area is rather low and in particular may not be constantly as high as it is required for certain services, in particular for voice calls or data calls.

In the exemplary situation shown in Fig. 10, the mobile device 1 is located within the core coverage area 4.4 of cell 3.4, which is a cell assigned to network N2. Furthermore, mobile device 1 is also located within the extended coverage area 5.1 of cell 3.1, which is assigned to network N1.

The mobile device may be a mobile phone 1 like depicted in Fig. 10. However, it is noted that the mobile device 1 can be any type of device configured for radio communication with wireless cellular communication networks in accordance with the technologies provided by the networks N1 and N2. For instance, the mobile device 1 can be an M2M-module, or an application device comprising the M2M module in connection with an application unit. The technologies supported by the networks N1 and N2 may be the same or different. As a first example, both networks N1 and N2 may support wireless cellular communication using the same 3G standard. As a second example, network N1 may be a 3G network, while network N2 may be a network at least momentarily supporting only a different standard, such as 2G or LTE.

It is firstly assumed for the following example of the method embodiment to be described, that the mobile device 1 has the network N1 as its home network and that it was earlier, i.e., before the point in time illustrated in Fig. 10, located within the core area 4.1 of the cell 3.1. At the present point in time, the mobile device 1 is in the extended coverage area 5.1 of the cell 3.1.

The cell-assignment and cell-reselection handling, in a mode of operation of the mobile device 1 that as such is known in the prior art, depends on acceptability-criteria, which are predefined by the respective network and in the present specification referred to as the preliminary acceptability-criteria. According to this mode of operation, which is the second mode of operation in the language of the claims and of the previous description of embodiments, the network N1 defines preliminary acceptability-criteria, which the mobile device has to apply. Typically, these preliminary acceptability-criteria are of rather low severity. All those base stations form candidate cells for forming a target cell (herein also referred to as the second cell) in a cell reselection procedure, which are physically detectable for the RF unit based on the given receiver sensitivity of the RF unit. In this situation, due to the rather low severity of the preliminary acceptability-criteria, the mobile device 1 typically remains camping on cell 3.1 even in situations bearing disadvantages in performance for the user. In particular, since the mobile device detects cell 3.1 even when located in the extended coverage area 5.1 of cell 3.1, it will remain camping on cell 3.1, even though cell 3.4 of network N2 provides much better radio conditions, i.e., a higher signal strength, because the mobile device 1 is located in its core coverage area 4.4.

This situation, which is the only option of operation according to the prior art, implies disadvantages for the user of the mobile device 1, which may take the form of a poor connection resulting in poor speech quality in a voice call, low effective data rate in a data call, or call drops. In addition, battery power of the mobile device is wasted, due to an increased signalling amount and a required higher transmission power in exchange with the base station 3.1.

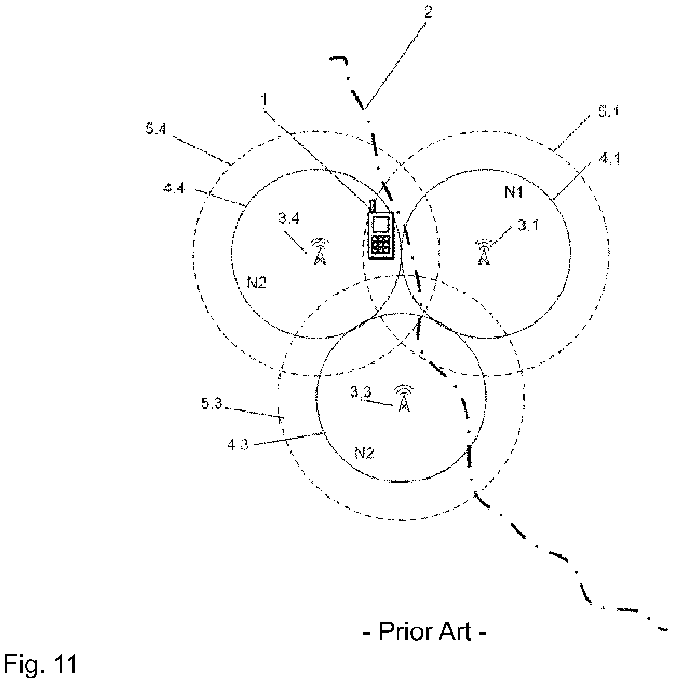

Fig. 11 shows a schematic illustration of an effect of a selection process of candidate cells for a cell reassignment, using preliminary acceptability-criteria provided by the network, in accordance with processes known from the prior art, as performed by a mobile device according to the prior art when located within the coverage areas of the same cells and networks shown in Fig. 10. Figure 11 shows the situation that is incurred if in a lower-level measuring layer of mobile device 1 those cells are filtered out that not comply with preliminary acceptability-criteria. In the present case, it is assumed that cells 3.3 and 3.4 are detected that comply with preliminary acceptability-criteria and are therefore forwarded to the higher level handling layer for decision if cell related procedures are executed that can lead to a cell change to one of the candidate cells, here 3.3, 3.4. Cell 3.1 is the current cell, where mobile device 1 is camping on and it is therefore not taken into account for a cell-reselection or cell change. Cell 3.2 is not visible for high-level handling layer anymore.

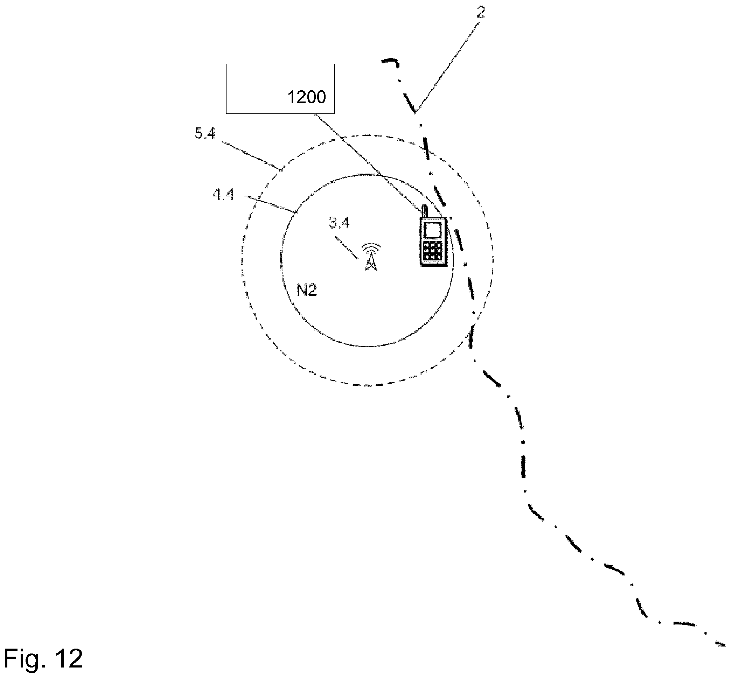

Embodiments of a mobile device of the present embodiment may be configured to operate as described with reference to Fig. 11, but are additionally configured to operate in an alternative mode of operation, which in the present specification and in some of the claims is referred to as the first mode of operation. This will be described in the following with reference to Fig. 12.

Fig. 12 shows a schematic illustration of an effect of a selection process of candidate cells for a cell reassignment as performed in accordance with an embodiment of a method of the present invention, using first acceptability-criteria maintained by a mobile device 1200 forming an embodiment of a mobile device according the present invention. The mobile device 1200 is assumed to be located within the same coverage area as shown in Figs. 10 and 11 at the same point in time. Instead of preliminary acceptability-criteria that were provided through the network, in particular RX_LEV_ACCESS_MIN resp. GPRS_RX_LEV_ACCESS_MIN for 2G or Qrxlevmin resp. Qqualmin for 3G or others, mobile device 1200 maintains its own acceptability-criteria in the form of the first acceptability-criteria, which in particular have a higher severity than the preliminary acceptability-criteria, on which the cell selection described with respect to Fig. 11 is based. The current cell and potential other cells are examined based on these first acceptability-criteria.

In comparison with the preliminary acceptability-criteria used by the mobile device 1 shown in Fig. 11, the first acceptability-criteria applied by the mobile device 1200 thus have a higher severity. The current cell is in this variant also taken into account and examined using the first acceptability-criteria. In effect, the mobile device 1200 detects a suitable coverage area that is barely exceeding the core-coverage area 4.1. This leads to the mobile device 1200 determining that it cannot be served anymore on the basis of the current cell assignment. Therefore a search for better-suited cells, in particular a network (PLMN) scan, is executed by the mobile device 1200. In the course of that, it turns out that only cell 3.4 suits the first acceptability-criteria and therefore a cell change to cell 3.4 is initiated by the mobile device 1200.

Thus, in the same assumed situation, the mobile device 1200 shows a behavior that differs from that of the mobile device 1 known from the prior art. This is based on the use of the first acceptability-criteria locally maintained by the mobile 1200 itself, instead of the preliminary acceptability-criteria, which are provided by the network. The modified behavior leads to an enhanced user experience that benefits from the preference of a well-suited cell providing better signal quality, even if that well-suited cell belongs to a different network, over the continued selection of a home cell providing only poor signal quality.

In a variant, the current cell is additionally compared to second acceptability-criteria, which are different from the first acceptability-criteria that are used to examine the other cells. In comparison with the first acceptability-criteria, the second acceptability-criteria are of lower severity, but at the same time are also of higher severity than the preliminary acceptability-criteria provided by the network. This may in certain situations avoid a high frequency of cell reselections, if the current cell is not required to fulfill the first acceptability-criteria, but only the second acceptability-criteria.

It is suggested that the mobile device 1200 is configured to derive said first and, if given, second acceptability-criteria (or to maintain them) based on the network-provided preliminary acceptability-criteria, e.g., by modifying the preliminary acceptability-criteria by an absolute or relative amount in comparison with the preliminary acceptability-criteria.

The described processes can be initiated depending from the call status, that is if in connected or idle mode, from the type of service, that is if voice or other service is used, or in dependence of any type of service degradation, e.g. if a certain amount of decoding error happens in the currently assigned cell.

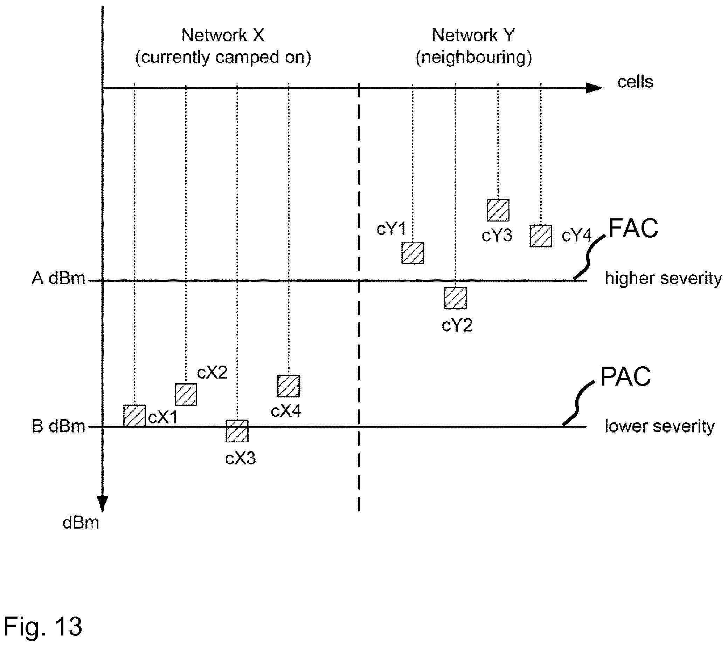

Fig 13 is a diagram illustrating an evaluation result determined by a mobile device for instance in step 808 of the process of Fig. 8 or in step 912 of the process of Fig. 9. The mobile device evaluates a signal quality (measured in dBm), which is indicated along the ordinate) provided by base stations of different cells (arranged along the abscissa) of two different networks X, to which the mobile device is currently attached (also referred to as camping) and Y. For reasons of clarity, the cells of the networks are shown with a separation by a vertical dashed line in Fig. 13. No geographical meaning is implied by this dashed line. Two horizontal full lines are shown that represent
a) first acceptability-criteria (labelled FAC) maintained by the mobile device and having a higher severity, and
b) preliminary acceptability-criteria (labelled PAC) having a lower severity and being provided by the network X.

In the exemplary situation shown in Fig. 13, network X has four cells X1 to X4 detectable by the mobile device according to its given receiver sensitivity, which provide signal qualities indicated by hashed squares marked cX1 to cX4. Network Y has four cells Y1 to Y4 detectable by the mobile device, which provide signal qualities indicated by hashed squares marked cY1 to cY4. Thus, as can be seen from Fig. 13, the cells Y1 to Y4 provide higher signal quality than the cells X1 to X4. The cells Y1, Y3, and Y4 comply with the first acceptability-criteria, while cell Y2 and cells X1 to X4 do not.

Based on the prior art, which applies the preliminary acceptability-criteria PAC only, no change of cell assignment is indicated in the situation shown. In contrast, according to embodiments of the present invention, due to the application of the first acceptability-criteria FAC, the mobile device determines that the current situation is suited for a change of the cell assignment and initiates corresponding cell-related processes that will select one of the cells Y1, Y3 or Y4 as a target cell for a change of the cell assignment.

## Claims

1. A mobile device (100) configured to communicate with base stations (3.1, 3.2, 3.3. 3.4), a respective base station being linked to at least one of a plurality of cells, each cell belonging to one wireless cellular communication network (N1, N2) of a set comprising at least this one wireless cellular communication network, the mobile device (100) further comprising a RF unit (701) configured to receive, with a given receiver sensitivity, and transmit RF signals for communication with base stations and to measure physical quantities related to those RF signals received, and wherein said mobile device (100) is configured to
operate under a cell assignment to a first one of said cells,
detect cells of the wireless cellular communication network (N1, N2),
initiate cell-related procedures in order to execute a change of the cell assignment to a second one of said cells,
maintain predeterminable first acceptability-criteria for cell assignment, which are related to the measurable physical quantities of the received RF signals and to
consider in a first mode of operation of the mobile device (100), said mode relating to a predetermined operational state of the mobile device only those cells of the set of wireless cellular communication networks (N1, N2) for the change of the cell assignment, which cells comply with said first acceptability-criteria, and
to consider, in a second mode of operation of the mobile device (100), different from the first mode of operation, all those base stations (3.1, 3.2, 3.3. 3.4) as the candidate cells for forming the second cell, which are physically detectable for the RF unit (701) based on the given receiver sensitivity of the RF unit (701).

2. The mobile device (100) according to claim 1, which is configured to
additionally maintain second acceptability-criteria, which are of equal or lower severity compared to said first acceptability-criteria, and to
select, in the first mode of operation, the currently assigned first cell for continued cell assignment if the first cell complies with the second predeterminable acceptability-criteria.

3. The mobile device (100) according to one of the preceding claims, wherein the mobile device is configured to
permanently store predeterminable reference acceptability-criteria,
receive preliminary acceptability-criteria from a network node of the wireless cellular communication network (N1, N2) to which it is currently attached,
compare said preliminary acceptability-criteria with the stored reference acceptability-criteria, and to
use the reference acceptability-criteria as the first acceptability-criteria in the first mode of operation, if the preliminary acceptability-criteria received from the network node are of lower severity than the reference acceptability-criteria, otherwise use the preliminary acceptability-criteria as the first acceptability-criteria in the first mode of operation.

4. The mobile device (100) according to one of the preceding claims, which, is further configured to
initiate an examination of the compliance of the RF signals received from the first cell with said first acceptability-criteria,
if said RF signals received from the first cell do not match the first acceptability-criteria, initiate a check for a physical detectability of RF signals from at least one second cell different from the first cell and an examination of the compliance of the RF signals received from the detected at least one second cell with said first acceptability-criteria ,
if it is found in the examination that one of those physically detectable second cells matches the first acceptability-criteria, initiate the cell-related procedure to change the cell assignment to that second cell,
if it is found in the examination that no second cell is available, adapt the first acceptability-criteria towards a lower severity and repeat the foregoing steps of examining and checking, until a second cell is detected that matches the adapted first acceptability-criteria. or, in case of a mobile device (100) of claim 3, the first acceptability-criteria equal the preliminary acceptability-criteria.

5. The mobile device (100) according to at least one of the previous claims, wherein the RF unit (701) is configured to examine RF signals received from all those base stations (3.1, 3.2, 3.3. 3.4), which are physically detectable for the RF unit based on a given receiver sensitivity of the RF unit (701), for compliance with the first acceptability-criteria, and wherein the RF unit is further configured to
a) only in the first mode of operation, provide at its output cell information on only those cells different from the currently assigned first cell, which are linked to those base stations providing RF signals that comply with the first acceptability-criteria and which thus form the candidate cells, and
b) only in a second mode of operation provide at its output cell information on all cells of those base stations (3.1, 3.2, 3.3. 3.4), which are physically detectable for the RF unit based on the given receiver sensitivity of the RF unit.

6. The mobile device (100) according to at least one of the previous claims,,
wherein the RF unit (701) is configured to provide at its output signal information on RF signals received from all those base stations (3.1, 3.2, 3.3. 3.4), which are physically detectable for the RF unit based on a given receiver sensitivity of the RF unit (701),
the mobile device (100) further comprising a filter unit (716), which is connected with the RF unit (701) and which is configured to examine the radio signal information for compliance with the first acceptability-criteria and,
a) only in the first mode of operation, provide at its output cell information on only those cells, which are linked to those base stations (3.1, 3.2, 3.3. 3.4) which the signal information comply with the first acceptability-criteria and which thus form the candidate cells, and
b) only in a second mode of operation different from the first mode of operation, provide at its output cell information on all cells of those base stations, which are physically detectable for the RF unit (701) based on the given receiver sensitivity of the RF unit (701) or based on preliminary acceptability-criteria.

7. The mobile device (100) of any of the claims 1 to 8, further comprising an evaluation unit (718), which is configured to detect the operational state of the mobile device (100) and to
activate or maintain the first mode of operation, in case the detected operational state is one of the following: an ongoing Power-on procedure, a detected out-of-service state, an ongoing PLMN selection, an ongoing PLMN search, a detected idle mode of operation, a detected radio-link failure, a failed call re-establishment, an ongoing cell-reselection procedure being performed after a radio-link failure and to
activate or maintain the second mode of operation, in case the detected operational state is one of the following: an ongoing call-reestablishment, an ongoing circuit-switched call, and an operation of the mobile device (100) in a connected mode.

8. An application device (400) comprising the mobile device (100) of one of the preceding claims, and further comprising an application unit (414), which is connected with the mobile device (100) and configured to control operation of the mobile device (100) via a set of AT commands, wherein the application unit (414) is configured to provide at least one of the following control information to the mobile device (100) via at least one of the AT commands:
a) first control information comprising the first acceptability-criteria and an instruction to apply these first acceptability-criteria; and
b) second control information instructing the mobile device (100) to change from the second mode of operation to the first mode of operation, or vice versa.

9. A method for operating a mobile device (100) in communication with base stations (3.1, 3.2, 3.3. 3.4), a respective base station being assigned to a respective one of a plurality of cells belonging to one wireless cellular communication network (N1, N2) of a set comprising at least this one wireless cellular communication network (N1, N2), the mobile device further comprising a RF unit (701) the method comprising: operating the mobile device (100) under a cell assignment to a first one of said cells;
receiving, by means of the RF unit (701) with a given receiver sensitivity, RF signals in communication with base stations;
measuring physical quantities related to those RF signals received;
determining a currently active mode of operation of the mobile device (100); maintaining predeterminable first acceptability-criteria for cell assignment as criteria related to the measurable physical quantities of the received RF signals;
detecting cells of the wireless cellular communication network (N1, N2);
initiating cell-related procedures in order to execute a change of the cell assignment to a second one of said cells, and
either considering, if a first mode of operation of the mobile device, relating to a predetermined operational state of the mobile device (100), is active only those cells of the set of wireless cellular communication networks (N1, N2) for a change of the cell assignment that comply with said first acceptability-criteria,
or considering, if a second mode of operation of the mobile device (100) is currently active that is different from the first mode of operation, all those base stations (3.1, 3.2, 3.3. 3.4) as the candidate cells for forming the second cell, which are physically detectable for the RF unit (701) based on the given receiver sensitivity of the RF unit (701).

10. The method according to claim 9, further comprising
activating the first mode of operation in response to receiving a command, in particular an AT command.

11. The method according to one of the claims 9 or 10, further comprising
automatically activating or maintaining the first mode of operation in response to detecting the predetermined operational state of the mobile device (100) in response to detecting one of the following: a radio-link failure, a failed call re-establishment, an abnormal termination of a circuit-switched or packet-switched call,

12. The method according to claim 11,
wherein, when one of an out-of-service state, an ongoing PLMN search, and a detected radio-link failure, which has not been followed a call re-establishment procedure is detected, only those detected cells are considered as the candidate cells for the second cell that are part of a second wireless cellular communication network (N1, N2) which is different from the first wireless cellular communication network (N1, N2), of which the first cell is part of.

13. The method according to one of the claims 9 to 12, wherein maintaining the first acceptability-criteria is performed in a context-specific manner for a detected one of a plurality of different predetermined context types including at least one of the following:
a) type of service
b) technology type and
c) user selection.
and wherein maintaining the first acceptability-criteria comprises:
detecting the current context type using at least one predetermined context comparison criterion, and
if the current context falls under one of the predetermined context types according to the context comparison criterion, using said context-specific first acceptability-criteria that is specific for the detected context type.

## Patentansprüche

1. Mobiles Gerät (100), das dafür konfiguriert ist, mit Basisstationen (3.1, 3.2, 3.3, 3.4) zu kommunizieren, wobei eine jeweilige Basisstation mit mindestens einer Vielzahl von Zellen verbunden ist, wobei jede Zelle einem Funkzellenkommunikationsnetz (N1, N2) einer mindestens dieses eine Funkzellenkommunikationsnetz umfassenden Menge angehört, wobei das mobile Gerät (100) ferner eine RF-Einheit (701) umfasst, die dafür konfiguriert ist, RF-Signale zur Kommunikation mit Basisstationen mit einer gegebenen Empfängerempfindlichkeit zu empfangen und zu übertragen und diese empfangenen RF-Signale betreffende physikalische Größen zu messen, und
wobei das mobile Gerät (100) konfiguriert ist, um
unter einer Zellenzuteilung zu einer ersten der Zellen zu arbeiten,
Zellen des Funkzellenkommunikationsnetzes (N1, N2) zu erfassen, zellenbezogene Prozeduren einzuleiten, um einen Wechsel der Zellenzuteilung zu einer zweiten der Zellen auszuführen,
vorab bestimmbare erste Akzeptabilitätskriterien zur Zellenzuteilung beizubehalten, welche die messbaren physikalischen Größen der empfangenen RF-Signale betreffen, und
in einem ersten Betriebsmodus des mobilen Geräts (100), welcher einen vorab bestimmten Betriebszustand des mobilen Geräts betrifft, nur diejenigen Zellen der Menge von Funkzellenkommunikationsnetzen (N1, N2) für den Wechsel der Zellenzuteilung zu erwägen, welche die ersten Akzeptabilitätskriterien erfüllen, und
in einem von dem ersten Betriebsmodus verschiedenen zweiten Betriebsmodus des mobilen Geräts (100) alle diejenigen Basisstationen (3.1, 3.2, 3.3, 3.4) als die zum Bilden der zweiten Zelle in Frage kommenden Zellen zu erwägen, die auf Grundlage der gegebenen Empfängerempfindlichkeit der RF-Einheit (701) für die RF-Einheit (701) physikalisch erfassbar sind.

2. Mobiles Gerät (100) nach Anspruch 1, das konfiguriert ist, um zusätzlich zweite Akzeptabilitätskriterien beizubehalten, die verglichen mit den ersten Akzeptabilitätskriterien von gleicher oder geringerer Strenge sind, und
in dem ersten Betriebsmodus die aktuell zugeteilte erste Zelle zur fortgesetzten Zellzuteilung auszuwählen, falls die erste Zelle die zweiten vorab bestimmbaren Akzeptabilitätskriterien erfüllt.

3. Mobiles Gerät (100) nach einem der vorhergehenden Ansprüche, wobei das mobile Gerät konfiguriert ist, um
vorab bestimmbare Referenzakzeptabilitätskriterien dauerhaft zu speichern,
von einem Netzknoten des Funkzellenkommunikationsnetzes (N1, N2), mit dem dieses aktuell verbunden ist, vorläufige Akzeptabilitätskriterien zu empfangen,
die vorläufigen Akzeptabilitätskriterien mit den gespeicherten Referenzakzeptabilitätskriterien zu vergleichen und
in dem ersten Betriebsmodus die Referenzakzeptabilitätskriterien als die ersten Akzeptabilitätskriterien zu verwenden, falls die von dem Netzknoten empfangenen vorläufigen Akzeptabilitätskriterien von geringerer Strenge sind als die Referenzakzeptabilitätskriterien, und andernfalls in dem ersten Betriebsmodus die vorläufigen Akzeptabilitätskriterien als die ersten Akzeptabilitätskriterien zu verwenden.

4. Mobiles Gerät (100) nach einem der vorhergehenden Ansprüche, das ferner konfiguriert ist, um
eine Untersuchung der Erfüllung der ersten Akzeptabilitätskriterien durch die von der ersten Zelle empfangenen RF-Signale einzuleiten,
falls die von der ersten Zelle empfangenen RF-Signale den ersten Akzeptabilitätskriterien nicht entsprechen, eine Prüfung einer physikalischen Erfassbarkeit von RF-Signalen von zumindest einer von der ersten Zelle verschiedenen zweiten Zelle und eine Untersuchung der Erfüllung der ersten Akzeptabilitätskriterien durch die von der zumindest einen erfassten zweiten Zelle empfangenen RF-Signale einzuleiten,
falls in der Untersuchung festgestellt wird, dass eine dieser physikalisch erfassbaren zweiten Zellen den ersten Akzeptabilitätskriterien entspricht, die zellenbezogene Prozedur einzuleiten, um einen Wechsel der Zellenzuteilung zu dieser zweiten Zelle vorzunehmen,
falls in der Untersuchung festgestellt wird, dass keine zweite Zelle verfügbar ist, die ersten Akzeptabilitätskriterien in Richtung einer geringeren Strenge anzupassen und die vorstehenden Schritte des Untersuchens und Prüfens zu wiederholen, bis eine zweite Zelle erfasst wird, die den angepassten ersten Akzeptabilitätskriterien entspricht, oder, im Falle eines mobilen Geräts (100) nach Anspruch 3, die ersten Akzeptabilitätskriterien den vorläufigen Akzeptabilitätskriterien gleichen.

5. Mobiles Gerät (100) nach mindestens einem der vorhergehenden Ansprüche, wobei die RF-Einheit (701) dafür konfiguriert ist, RF-Signale, die von allen denjenigen Basisstationen (3.1, 3.2, 3.3, 3.4) empfangen werden, die auf Grundlage einer gegebenen Empfängerempfindlichkeit der RF-Einheit (701) für die RF-Einheit physikalisch erfassbar sind, auf Erfüllung der ersten Akzeptabilitätskriterien zu untersuchen, und wobei die RF-Einheit ferner konfiguriert ist, um
a) nur in dem ersten Betriebsmodus an ihrem Ausgang Zelleninformationen nur über diejenigen von der aktuell zugeteilten ersten Zelle verschiedenen Zellen bereitzustellen, die mit denjenigen Basisstationen verbunden sind, die RF-Signale bereitstellen, welche die ersten Akzeptabilitätskriterien erfüllen, und die somit die in Frage kommenden Zellen bilden, und
b) nur in einem zweiten Betriebsmodus an ihrem Ausgang Zelleninformationen über alle Zellen derjenigen Basisstationen (3.1, 3.2, 3.3, 3.4) bereitzustellen, die auf Grundlage der gegebenen Empfängerempfindlichkeit der RF-Einheit für die RF-Einheit physikalisch erfassbar sind.

6. Mobiles Gerät (100) nach mindestens einem der vorhergehenden Ansprüche,
wobei die RF-Einheit (701) dafür konfiguriert ist, an ihrem Ausgang Signalinformationen über RF-Signale bereitzustellen, die von allen denjenigen Basisstationen (3.1, 3.2, 3.3, 3.4) empfangen werden, die auf Grundlage einer gegebenen Empfängerempfindlichkeit der RF-Einheit (701) für die RF-Einheit physikalisch erfassbar sind,
wobei das mobile Gerät (100) ferner eine Filtereinheit (716) umfasst, die mit der RF-Einheit (701) verbunden ist und die dafür konfiguriert ist, die Funksignalinformationen auf Erfüllung der ersten Akzeptabilitätskriterien zu untersuchen und
a) nur in dem ersten Betriebsmodus an ihrem Ausgang Zelleninformationen nur über diejenigen Zellen bereitzustellen, die mit denjenigen Basisstationen (3.1, 3.2, 3.3, 3.4) verbunden sind, bei denen die Signalinformationen die ersten Akzeptabilitätskriterien erfüllen, und die somit die in Frage kommenden Zellen bilden, und
b) nur in einem von dem ersten Betriebsmodus verschiedenen zweiten Betriebsmodus an ihrem Ausgang Zelleninformationen über alle Zellen derjenigen Basisstationen bereitzustellen, die auf Grundlage der gegebenen Empfängerempfindlichkeit der RF-Einheit (701) oder auf Grundlage vorläufiger Akzeptabilitätskriterien für die RF-Einheit (701) physikalisch erfassbar sind.

7. Mobiles Gerät (100) nach einem der Ansprüche 1 bis 8, ferner umfassend eine Bewertungseinheit (718), die dafür konfiguriert ist, den Betriebszustand des mobilen Geräts (100) zu erfassen und
den ersten Betriebsmodus zu aktivieren oder beizubehalten, falls es sich bei dem erfassten Betriebszustand um einen der folgenden handelt: eine laufende Startprozedur, einen erfassten Außerdienstzustand, eine laufende PLMN-Auswahl, eine laufende PLMN-Suche, einen erfassten Ruhebetriebsmodus, einen erfassten Funkverbindungsausfall, eine fehlgeschlagene Rufwiederherstellung, eine laufende Zellenneuauswahlprozedur, die nach einem Funkverbindungsausfall durchgeführt wird, und
den zweiten Betriebsmodus zu aktivieren oder beizubehalten, falls es sich bei dem erfassten Betriebszustand um einen der folgenden handelt: eine laufende Rufwiederherstellung, einen laufenden leitungsvermittelten Ruf und einen Betrieb des mobilen Geräts (100) in einem verbundenen Modus.

8. Anwendungseinrichtung (400), welche das mobile Gerät (100) nach einem der vorhergehenden Ansprüche umfasst und ferner eine Anwendungseinheit (414) umfasst, die mit dem mobilen Gerät (100) verbunden und dafür konfiguriert ist, einen Betrieb des mobilen Geräts (100) über einen Satz von AT-Befehlen zu steuern, wobei die Anwendungseinheit (414) dafür konfiguriert ist, dem mobilen Gerät (100) über mindestens einen der AT-Befehle mindestens eines der folgenden Steuerinformationen bereitzustellen:
a) erste Steuerinformationen, welche die ersten Akzeptabilitätskriterien und eine Anweisung zum Anwenden dieser ersten Akzeptabilitätskriterien umfassen, und
b) zweite Steuerinformationen, welche das mobile Gerät (100) anweisen, von dem zweiten Betriebsmodus in den ersten Betriebsmodus zu wechseln oder umgekehrt.

9. Verfahren zum Betreiben eines mobilen Geräts (100), das mit Basisstationen (3.1, 3.2, 3.3, 3.4) in Kommunikation steht, wobei eine jeweilige Basisstation einer jeweiligen einer Vielzahl von Zellen zugeteilt ist, die einem Funkzellenkommunikationsnetz (N1, N2) einer mindestens dieses eine Funkzellenkommunikationsnetz (N1, N2) umfassenden Menge angehört, wobei das mobile Gerät ferner eine RF-Einheit (701) umfasst, wobei das Verfahren Folgendes umfasst:
Betreiben des mobilen Geräts (100) unter einer Zellenzuteilung zu einer ersten der Zellen,
Empfangen von RF-Signalen in Kommunikation mit Basisstationen mittels der RF-Einheit (701) mit einer gegebenen Empfängerempfindlichkeit,
Messen von diese empfangenen Signale betreffenden physikalischen Größen,
Bestimmen eines aktuell aktiven Betriebsmodus des mobilen Geräts (100), Beibehalten vorab bestimmbarer erster Akzeptabilitätskriterien zur Zellenzuteilung als die messbaren physikalischen Größen der empfangenen RF-Signale betreffende Kriterien,
Erfassen von Zellen des Funkzellenkommunikationsnetzes (N1, N2),
Einleiten zellenbezogener Prozeduren, um einen Wechsel der Zellenzuteilung zu einer zweiten der Zellen auszuführen, und
entweder, falls ein erster Betriebsmodus des mobilen Geräts (100) aktiv ist, welcher einen vorab bestimmten Betriebszustand des mobilen Geräts (100) betrifft, Erwägen nur derjenigen Zellen der Menge von Funkzellenkommunikationsnetzen (N1, N2) für einen Wechsel der Zellenzuteilung, welche die ersten Akzeptabilitätskriterien erfüllen, oder, falls ein von dem ersten Betriebsmodus verschiedener zweiter Betriebsmodus des mobilen Geräts (100) aktiv ist, Erwägen aller derjenigen Basisstationen (3.1, 3.2, 3.3, 3.4) als die zum Bilden der zweiten Zelle in Frage kommenden Zellen, die auf Grundlage der gegebenen Empfängerempfindlichkeit der RF-Einheit (701) für die RF-Einheit (701) physikalisch erfassbar sind.

10. Verfahren nach Anspruch 9, ferner umfassend:
Aktivieren des ersten Betriebsmodus in Reaktion auf ein Empfangen eines Befehls, insbesondere eines AT-Befehls.

11. Verfahren nach einem der Ansprüche 9 oder 10, ferner umfassend ein automatisches Aktivieren oder Beibehalten des ersten Betriebsmodus in Reaktion auf ein Erfassen des vorab bestimmten Betriebszustands des mobilen Geräts (100) in Reaktion auf ein Erfassen eines der Folgenden:
eines Funkverbindungsausfalls, einer fehlgeschlagenen Rufwiederherstellung, einer abnormalen Beendigung eines leitungsvermittelten oder paketvermittelten Rufs,

12. Verfahren nach Anspruch 11,
wobei, wenn ein Außerdienstzustand, eine laufende PLMN-Suche oder ein erfasster Funkverbindungsausfall erfasst wird, dem keine Rufwiederherstellungsprozedur folgte, nur diejenigen erfassten Zellen als die für die zweite Zelle in Frage kommenden Zellen erwogen werden, die Teil eines zweiten Funkzellenkommunikationsnetzes (N1, N2) sind, welches sich von dem ersten Funkzellenkommunikationsnetz (N1, N2) unterscheidet, dem die erste Zelle angehört.

13. Verfahren nach einem der Ansprüche 9 bis 12, wobei das Beibehalten der ersten Akzeptabilitätskriterien in kontextspezifischer Weise für eine erfasste einer Vielzahl verschiedener vorab bestimmter Kontextarten durchgeführt wird, welche mindestens eine der folgenden umfasst:
a) Dienstart
b) Technologieart und
c) Nutzerauswahl
und wobei das Beibehalten der ersten Akzeptabilitätskriterien Folgendes umfasst:
Erfassen der aktuellen Kontextart mittels mindestens eines vorab bestimmten Kontextvergleichskriteriums und
falls der aktuelle Kontext gemäß dem Kontextvergleichskriterium unter eine der vorab bestimmten Kontextarten fällt, Verwenden der für die erfasste Kontextart spezifischen kontextspezifischen ersten Akzeptabilitätskriterien.

## Revendications

1. Un dispositif mobile (100) configuré pour communiquer avec des stations de base (3.1, 3.2, 3.3, 3.4), une station de base respective liée à au moins une cellule parmi plusieurs, chaque cellule appartenant à un réseau de communication cellulaire sans fil (N1, N2) au sein d'un ensemble comprenant au moins ce réseau de communication cellulaire sans fil, le dispositif mobile (100) incluant par ailleurs une unité RF (701) configurée pour recevoir, avec une sensibilité de récepteur donnée, et transmettre des signaux RF pour la communication avec les stations de base et pour mesurer des quantités physiques liées aux signaux RF reçus et où ledit dispositif mobile (100) est configuré pour
fonctionner selon une affectation à une première desdites cellules,
détecter des cellules du réseau de communication cellulaire sans fil (N1, N2),
lancer des procédures liées aux cellules, afin de réaliser un changement d'affectation pour passer à une autre desdites cellules,
maintenir de premiers critères d'acceptabilité préalablement déterminables pour l'affectation à une cellule, qui sont liés aux quantités physiques mesurables des signaux RF reçus, et pour
envisager pour le changement d'affectation, dans un premier mode de fonctionnement du dispositif mobile (100), ledit mode étant lié à un état opérationnel prédéterminé du dispositif mobile, uniquement les cellules de l'ensemble de réseaux de communication cellulaire sans fil (N1, N2) respectant lesdits premiers critères d'acceptabilité, et
envisager comme cellules candidates pour la formation de la deuxième cellule, dans un second mode de fonctionnement du dispositif mobile (100), différent du premier mode de fonctionnement, toutes les stations de base (3.1, 3.2, 3.3, 3.4) physiquement détectables pour l'unité RF (701) selon sa sensibilité de récepteur donnée.

2. Le dispositif mobile (100) selon la revendication 1, configuré pour
maintenir de plus un deuxième ensemble de critères d'acceptabilité, aussi stricts ou moins stricts que lesdits premiers critères d'acceptabilité, et pour
sélectionner, dans le premier mode de fonctionnement, la première cellule actuellement affectée pour le maintien de l'affectation si la première cellule respecte le deuxième ensemble de critères d'acceptabilité préalablement déterminables.

3. Le dispositif mobile (100), selon l'une des précédentes revendications, où le dispositif mobile est configuré pour
stocker de façon permanente des critères d'acceptabilité de référence préalablement déterminables, recevoir les critères d'acceptabilité préliminaires provenant d'un noeud du réseau de communication cellulaire sans fil (N1, N2) auquel il est actuellement rattaché,
comparer lesdits critères d'acceptabilité préliminaires aux critères d'acceptabilité de référence stockés, et pour
utiliser les critères d'acceptabilité de référence comme premiers critères d'acceptabilité dans le premier mode de fonctionnement,
si les critères d'acceptabilité préliminaires provenant du noeud de réseau sont moins stricts que les critères d'acceptabilité de référence, sinon utiliser les critères d'acceptabilité préliminaires comme premiers critères d'acceptabilité dans le premier mode de fonctionnement.

4. Le dispositif mobile (100), selon l'une des précédentes revendications, qui est de plus configuré pour
lancer un examen de conformité des signaux RF provenant de la première cellule par rapport auxdits premiers critères d'acceptabilité,
dans le cas où lesdits signaux RF provenant de la première cellule ne répondent pas aux premiers critères d'acceptabilité, lancer une vérification de détectabilité physique des signaux RF provenant d'au moins une deuxième cellule différente de la première et un examen de conformité des signaux RF provenant des deuxièmes cellules détectées (au moins une) par rapport auxdits premiers critères d'acceptabilité,
s'il est déterminé lors de l'examen que l'une de ces deuxièmes cellules physiquement détectables répond aux premiers critères d'acceptabilité, lancer la procédure liée aux cellules pour que l'affectation passe à cette deuxième cellule,
s'il est déterminé lors de l'examen qu'aucune deuxième cellule n'est disponible, adapter les premiers critères d'acceptabilité pour qu'ils soient moins stricts et répéter les précédentes étapes d'examen et de vérification, jusqu'à ce qu'une deuxième cellule soit détectée qui réponde aux premiers critères d'acceptabilité adaptés, ou, dans le cas d'un dispositif mobile (100) de revendication 3, jusqu'à ce que les premiers critères d'acceptabilité correspondent aux critères d'acceptabilité préliminaires.

5. Le dispositif mobile (100), selon au moins l'une des précédentes revendications, où l'unité RF (701) est configurée pour examiner les signaux RF provenant de toutes ces stations de base (3.1, 3.2, 3.3, 3.4), physiquement détectables pour l'unité RF (701) selon sa sensibilité de récepteur donnée, afin de déterminer la conformité par rapport aux premiers critères d'acceptabilité, et où l'unité RF est de plus configurée pour
a) uniquement dans le premier mode de fonctionnement, ne fournir au niveau de sa cellule de sortie des informations que sur les cellules différentes de la première cellule actuellement affectée, liées à ces stations de base fournissant des signaux RF respectant les premiers critères d'acceptabilité et formant donc les cellules candidates, et
b) uniquement dans un second mode de fonctionnement, fournir au niveau de sa cellule de sortie des informations sur toutes les cellules de ces stations de base (3.1, 3.2, 3.3, 3.4), physiquement détectables pour l'unité RF selon sa sensibilité de récepteur donnée.

6. Le dispositif mobile (100) selon au moins une des précédentes revendications où l'unité RF (701) est configurée pour fournir au niveau de son signal de sortie des informations sur les signaux RF provenant de toutes ces stations de base (3.1, 3.2, 3.3, 3.4), physiquement détectables pour l'unité RF (701) selon sa sensibilité de récepteur donnée,
le dispositif mobile (100) comprenant de plus une unité filtrante (716), connectée à l'unité RF (701) et configurée pour examiner les informations du signal radio, afin de déterminer la conformité par rapport aux premiers critères d'acceptabilité, et
a) uniquement dans le premier mode de fonctionnement, ne fournir au niveau de sa cellule de sortie des informations que sur les cellules liées à ces stations de base (3.1, 3.2, 3.3, 3.4) dont les informations de signal sont conformes aux premiers critères d'acceptabilité et formant donc les cellules candidates, et
b) uniquement dans un second mode de fonctionnement différent du premier mode de fonctionnement, fournir au niveau de sa cellule de sortie des informations sur toutes les cellules de ces stations de base, physiquement détectables pour l'unité RF (701) selon sa sensibilité de récepteur donnée ou d'après les critères d'acceptabilité préliminaires.

7. Le dispositif mobile (100) selon l'une des revendications 1 à 8, comprenant de plus une unité d'évaluation (718), configurée pour détecter l'état opérationnel du dispositif mobile (100) et pour
activer ou maintenir le premier mode de fonctionnement, si l'état opérationnel détecté est l'un des suivants : une procédure de mise sous tension en cours, un état détecté de hors service, une sélection PLMN en cours, une recherche PLMN en cours, un mode veille détecté, une défaillance détectée de liaison radio, un échec de rétablissement d'appel, une procédure de resélection de cellule en cours réalisée suite à une défaillance de liaison radio, et pour
activer ou maintenir le second mode de fonctionnement, si l'état opérationnel détecté est l'un des suivants : un rétablissement d'appel en cours, un appel par commutation de circuits en cours, et une utilisation du dispositif mobile (100) en mode connecté.

8. Un dispositif d'application (400) comprenant le dispositif mobile (100) de l'une des précédentes revendications, et comprenant de plus une unité d'application (414), connectée au dispositif mobile (100) et configurée pour contrôler le fonctionnement du dispositif mobile (100) via un ensemble de commandes AT, où l'unité d'application (414) est configurée pour fournir au moins une des informations de contrôle suivantes au dispositif mobile (100) via au moins une des commandes AT :
a) première information de contrôle comprenant les premiers critères d'acceptabilité et une instruction d'application de ces premiers critères d'acceptabilité ; et
b) deuxième information de contrôle indiquant au dispositif mobile (100) de passer du second mode de fonctionnement au premier, ou inversement.

9. Une méthode d'utilisation d'un dispositif mobile (100) en communication avec des stations de base (3.1, 3.2, 3.3, 3.4), une station de base respective étant affectée à une cellule respective parmi plusieurs appartenant à un réseau de communication cellulaire sans fil (N1, N2) au sein d'un ensemble comprenant au moins ce réseau de communication cellulaire sans fil (N1, N2), le dispositif mobile incluant de plus une unité RF (701), la méthode comprenant les activités suivantes : utilisation du dispositif mobile (100) selon une affectation à une première desdites cellules ;
réception, grâce à l'unité RF (701) d'une sensibilité de récepteur donnée, de signaux RF lors de la communication avec les stations de base ;
mesure de quantités physiques liées aux signaux RF reçus ;
détermination d'un mode de fonctionnement actuellement actif du dispositif mobile (100) ;
maintien de premiers critères d'acceptabilité préalablement déterminables pour l'affectation à une cellule comme critères liés aux quantités physiques mesurables des signaux RF reçus ;
détection de cellules du réseau de communication cellulaire sans fil (N1, N2) ;
lancement de procédures liées aux cellules, afin de réaliser un changement d'affectation pour passer à une autre desdites cellules, et
soit prise en compte pour le changement d'affectation à une cellule, si un premier mode de fonctionnement du dispositif mobile, lié à un état opérationnel prédéterminé du dispositif mobile (100), est actif, uniquement des cellules de l'ensemble de réseaux de communication cellulaire sans fil (N1, N2) respectant lesdits premiers critères d'acceptabilité,
ou prise en compte comme cellules candidates pour la formation de la deuxième cellule, si un second mode de fonctionnement du dispositif mobile (100) est actuellement actif, différent du premier mode de fonctionnement, de toutes ces stations de base (3.1, 3.2, 3.3, 3.4) physiquement détectables pour l'unité RF (701) selon sa sensibilité de récepteur donnée.

10. La méthode selon la revendication 9, comprenant de plus l'activation du premier mode de fonctionnement en réponse à la réception d'une commande, et notamment d'une commande AT.

11. La méthode selon l'une des revendications 9 ou 10, comprenant de plus l'activation automatique ou le maintien du premier mode de fonctionnement en réponse à la détection de l'état opérationnel prédéterminé du dispositif mobile (100) en réponse à la détection d'un des états suivants : une défaillance de liaison radio, un échec de rétablissement d'appel, l'arrêt anormal d'un appel par commutation de circuits ou commutation de paquets.

12. La méthode selon la revendication 11, dans laquelle, lorsqu'est détecté un état parmi un état de hors service, une recherche PLMN en cours et une défaillance de liaison radio détectée, non suivie par une procédure de rétablissement, seules sont envisagées comme cellules candidates pour la deuxième cellule les cellules détectées faisant partie d'un second réseau de communication cellulaire sans fil (N1, N2), différent du premier réseau de communication cellulaire sans fil (N1, N2), dont la première cellule fait partie.

13. La méthode selon l'une des revendications 9 à 12, où le maintien des premiers critères d'acceptabilité est réalisé de manière contextuelle pour un type détecté parmi plusieurs types de contextes prédéterminés distincts incluant au moins l'un des types suivants :
a) type de service
b) type de technologie et
c) sélection de l'utilisateur.
et où le maintien des premiers critères d'accessibilité comprend :
la détection du type de contexte actuel en utilisant au moins un critère de comparaison de contextes prédéterminé, et
si le contexte actuel correspond à l'un des types de contextes prédéterminés selon le critère de comparaison de contextes, l'utilisation desdits premiers critères d'accessibilité spécifiques au type de contexte détecté.
